(19) Europäisches Patentamt
European Patent Office
Office européen des brevets

(11) EP 3 559 105 B1

(12) **EUROPEAN PATENT SPECIFICATION**

(45) Date of publication and mention of the grant of the patent:
**18.11.2020 Bulletin 2020/47**

(21) Application number: **17829825.3**

(22) Date of filing: **19.12.2017**

(51) Int Cl.:
***C08L 27/12*** (2006.01) ***B33Y 70/00*** (2020.01)
***B29C 64/118*** (2017.01) ***C08K 7/28*** (2006.01)
***C08K 9/02*** (2006.01) ***C08K 3/04*** (2006.01)
***C08K 3/013*** (2018.01) ***C08K 3/22*** (2006.01)

(86) International application number:
**PCT/US2017/067365**

(87) International publication number:
**WO 2018/118956 (28.06.2018 Gazette 2018/26)**

(54) **FILAMENT BASED ON A COMPOSITION INCLUDING FLUOROPOLYMER AND INORGANIC FILLER AND METHOD OF MAKING A THREE-DIMENSIONAL ARTICLE**

FILAMENT AUS EINER ZUSAMMENSETZUNG MIT FLUORPOLYMER UND ANORGANISCHEM FÜLLSTOFF UND METHODE ZUR HERSTELLUNG VON DREIDIMENSIONALENE ARTIKELN

FILAMENT BASÉ SUR UNE COMPOSITION COMPRENANT UN FLUOROPOLYMÈRE ET UNE CHARGE INORGANIQUE ET MÉTHODE DE FABRICATION D’ARTICLES TRIDIMENSIONNELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2016 US 201662436817 P**

(43) Date of publication of application:
**30.10.2019 Bulletin 2019/44**

(73) Proprietor: **3M Innovative Properties Company**
**St. Paul, MN 55133-3427 (US)**

(72) Inventors:
- **BARTOW, Jeffrey N.**
  **Saint Paul**
  **Minnesota 55133-3427 (US)**
- **DADALAS, Michael C.**
  **D-41453 Neuss (DE)**
- **FRANKE, Carsten**
  **Saint Paul**
  **Minnesota 55104 (US)**
- **GANGNUS, Bernd**
  **88316 Isny (DE)**
- **GELDMACHER, Andreas**
  **D-41453 Neuss (DE)**
- **GOTTSCHALK-GAUDIG, Gabriele H.**
  **D-41453 Neuss (DE)**
- **HINTZER, Klaus**
  **D-41453 Neuss (DE)**
- **KORTEN, Malte**
  **D-82229 Seefeld (DE)**
- **NELSON, Per**
  **Saint Paul**
  **Minnesota 55133-3427 (US)**
- **SCHECHNER, Gallus**
  **D-82229 Seefeld (DE)**
- **ZEHENTMAIER, Sebastian F.**
  **D-41453 Neuss (DE)**
- **ZENTIS, Fee**
  **D-41453 Neuss (DE)**

(74) Representative: **Hettstedt, Stephan**
**3M Deutschland GmbH**
**3M Office of Intellectual Property Counsel**
**Carl-Schurz Str. 1**
**41453 Neuss (DE)**

(56) References cited:
**US-A1- 2002 132 906** **US-A1- 2008 081 182**
**US-A1- 2015 166 772** **US-A1- 2016 016 369**
**US-A1- 2016 297 935** **US-A1- 2016 318 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 559 105 B1

**Description**

Background

Fused Filament Fabrication, which is also known under the trade designation "FUSED DEPOSITION MODELING" from Stratasys, Inc., Eden Prairie, Minn., is a process that uses a thermoplastic strand fed through a hot can to produce a molten aliquot of material from an extrusion head. The extrusion head extrudes a bead of material in 3D space as called for by a plan or drawing (e.g., a computer aided drawing (CAD file)). The extrusion head typically lays down material in layers, and after the material is deposited, it fuses. Similar processes can use other input materials, such as thermoplastic pellets.

Composites including hollow glass microspheres and reinforcing fibers dispersed in a polymer phase and methods of making such composites are disclosed in U.S. Pat. Appl. Pub. No. 2016/0002468 (Heikkila et al.).

Certain inorganic materials have been reported in melt extrusion based additive manufacturing of polymer articles. U.S. Pat. Appl. No. 2016/0324491 (Sweeney et al.) describes microwave-absorbing materials. U.S. Pat. No. 7,910,041 (Priedeman, Jr.) describes nanofibers. U.S. 2016/0298268 (Gallucci et al.) describes that pigments can be included in certain thermoplastic polycarbonate compositions. US 2016/016369 A1 discloses FDM (filament deposition modelling) as additive manufacturing process. The polymer used is PVDF and no inorganic filler is present.

Summary

There are several problems that can arise with the many independently fused layers made in a fused filament fabrication process or other melt extrusion additive manufacturing processes. We have observed poor interlayer adhesion between layers of fluoropolymers formed by successive passes of the extruder head, which results in delamination of layers in the three-dimensional article. Without wishing to be bound by theory, it is believed that the low-surface-energy and typically low polarity in such polymers can prevent interlayer adhesion from one pass of the extruder head to the next. This can cause sliding or deformation of the new semi-molten layer, resulting in waviness, warpage, and dimensional instability.

Other problems can occur in melt extrusion additive manufacturing processes, especially with semi-crystalline thermoplastics. For example, the time it takes for a polymer to fuse solidly enough to act as a support for the next bead can be excessive. If the printer has to be run at a slow speed to allow for solidification and densification, the cost of making a part may be increased beyond a level where melt extrusion additive manufacturing can compete. Another problem that occurs is shrinkage or differential shrinkage (x-y plane vs. z plane) as the thermoplastic densifies upon solidification. This also can cause dimensional instability, warpage, and waviness, which may prevent certain polymer types or structures from being printed.

In one aspect, the present disclosure provides a method of making a three-dimensional article. The method includes heating a composition comprising a fluoropolymer and inorganic filler, extruding the composition in molten form from an extrusion head to provide at least a portion of a first layer of the three-dimensional article, and extruding at least a second layer of the composition in molten form from the extrusion head onto at least the portion of the first layer to make at least a portion of the three-dimensional article. In some embodiments, the method includes at least partially melting the fluoropolymer in the extrusion head to provide the composition in molten form. The fluoropolymer is a semi-crystalline fluorothermoplastic and has a melting point of up to 325 °C and less than 50 percent by weight interpolymerized units of vinylidene fluoride, or the fluoropolymer is amorphous and has a glass transition temperature of up to 280 °C. The composition may be provided, for example, as a filament, pellet, or granules.

In another aspect, the present disclosure provides a three-dimensional article made by such a method.

In another aspect, the present disclosure provides a filament for use in fused filament fabrication. The filament includes a fluoropolymer and inorganic filler. The fluoropolymer is a semi-crystalline fluorothermoplastic and has a melting point of up to 325 °C and less than 50 percent by weight interpolymerized units of vinylidene fluoride, or the fluoropolymer is amorphous and has a glass transition temperature of up to 280 °C.

In another aspect, the present disclosure provides a composition including a fluoropolymer and inorganic filler for use in melt extrusion additive manufacturing. The fluoropolymer is a semi-crystalline fluorothermoplastic and has a melting point of up to 325 °C and less than 50 percent by weight interpolymerized units of vinylidene fluoride, or the fluoropolymer is amorphous and has a glass transition temperature of up to 280 °C.

Typically and advantageously, when inorganic fillers are added to compositions for melt extrusion additive manufacturing made from fluoropolymers, good flow properties of the fluoropolymers can result in good adhesion between deposited layers. In contrast, when the composition does not contain inorganic fillers, poor interlayer adhesion can result, and air pockets and voids can form within the deposited layers. Also advantageously, in some embodiments, the filament for use in fused filament fabrication can have improved ovality when compared to filaments that include fluoropolymers but do not include inorganic fillers.

The term "ceramic" as used herein refers to glasses, crystalline ceramics, glass-ceramics, and combinations thereof.

Additive manufacturing, also known as "3D printing", refers to a process to create a three-dimensional object by sequential deposition of materials in defined areas, typically by generating successive layers of material. The object is typically produced under computer control from a 3D model or other electronic data source by an additive printing device typically referred to as a 3D printer.

"Alkyl group" and the prefix "alk-" are inclusive of both straight chain and branched chain groups and of cyclic groups having up to 30 carbons (in some embodiments, up to 20, 15, 12, 10, 8, 7, 6, or 5 carbons) unless otherwise specified. Cyclic groups can be monocyclic or polycyclic and, in some embodiments, have from 3 to 10 ring carbon atoms.

The term "perfluoroalkyl group" includes linear, branched, and/or cyclic alkyl groups in which all C-H bonds are replaced by C-F bonds.

The phrase "interrupted by one or more -O- groups", for example, with regard to an alkyl, alkylene, or arylalkylene refers to having part of the alkyl, alkylene, or arylalkylene on both sides of the one or more -O- groups. An example of an alkylene that is interrupted with one -O- group is $-CH_2-CH_2-O-CH_2-CH_2-$ .

The term "aryl" as used herein includes carbocyclic aromatic rings or ring systems, for example, having 1, 2, or 3 rings, optionally containing at least one heteroatom (e.g., O, S, or N) in the ring, and optionally substituted by up to five substituents including one or more alkyl groups having up to 4 carbon atoms (e.g., methyl or ethyl), alkoxy having up to 4 carbon atoms, halo (i.e., fluoro, chloro, bromo or iodo), hydroxy, or nitro groups. Examples of aryl groups include phenyl, naphthyl, biphenyl, fluorenyl as well as furyl, thienyl, oxazolyl, and thiazolyl. "Arylalkylene" refers to an "alkylene" moiety to which an aryl group is attached. "Alkylarylene" refers to an "arylene" moiety to which an alkyl group is attached.

The above summary of the present disclosure is not intended to describe each disclosed embodiment or every implementation of the present disclosure. The description that follows more particularly exemplifies illustrative embodiments. It is to be understood, therefore, that the following description should not be read in a manner that would unduly limit the scope of this disclosure.

## Brief Description of the Drawings

FIG. 1 is a schematic sectional view of an embodiment of an extrusion head useful in the method of the present disclosure;

FIG. 2 is a sectional view of an embodiment of a strand die extruding a filament according to the present disclosure;

FIG. 3 illustrates an embodiment of a system for carrying out the method of the present disclosure; and

FIG. 4 illustrates another embodiment of a system for carrying out the method of the present disclosure.

## Detailed Description

Extrusion-based layered deposition systems (e.g., fused filament fabrication systems and other melt extrusion additive manufacturing processes) are useful for making three-dimensional articles in the method of the present disclosure. The three-dimensional articles can be made, for example, from computer-aided design (CAD) models in a layer-by-layer manner by extruding a composition including a fluoropolymer and inorganic filler. Movement of the extrusion head with respect to the substrate onto which the substrate is extruded is performed under computer control, in accordance with build data that represents the three-dimensional article. The build data is obtained by initially slicing the CAD model of the three-dimensional article into multiple horizontally sliced layers. Then, for each sliced layer, the host computer generates a build path for depositing roads of the composition including a fluoropolymer and inorganic filler to form the three-dimensional article.

The composition can be extruded through a nozzle carried by an extrusion head and deposited as a sequence of roads of molten material on a substrate in an x-y plane. The roads can be in the form of continuous beads or in the form of a series of droplets (e.g., as described in U.S. Pat. Appl. No. 2013/0071599 (Kraibühler et al.)). The extruded composition fuses to previously deposited composition as it solidifies upon a drop in temperature. This can provide at least a portion of the first layer of the three-dimensional article. The position of the extrusion head relative to the first layer is then incremented along a z-axis (perpendicular to the x-y plane), and the process is repeated to form at least a second layer of the composition on at least a portion of the first layer. Changing the position of the extrusion head relative to the deposited layers may be carried out, for example, by lowering the substrate onto which the layers are deposited. The process can be repeated as many times as necessary to form a three-dimensional article resembling the CAD model. Further details can be found, for example, Turner, B.N. et al., "A review of melt extrusion additive manufacturing processes: I. process design and modeling"; Rapid Prototyping Journal 20/3 (2014) 192-204.

In some embodiments, a (e.g., non-transitory) machine-readable medium is employed in the method of making

a three-dimensional article of the present disclosure. Data is typically stored on the machine-readable medium. The data represents a three-dimensional model of an article, which can be accessed by at least one computer processor interfacing with additive manufacturing equipment (e.g., a 3D printer, a manufacturing device, etc.). The data is used to cause the additive manufacturing equipment to create the three-dimensional article.

Data representing an article may be generated using computer modeling such as computer aided design (CAD) data. Image data representing the three-dimensional article design can be exported in STL format, or in any other suitable computer processable format, to the additive manufacturing equipment. Scanning methods to scan a three-dimensional object may also be employed to create the data representing the article. One exemplary technique for acquiring the data is digital scanning. Any other suitable scanning technique may be used for scanning an article, including X-ray radiography, laser scanning, computed tomography (CT), magnetic resonance imaging (MRI), and ultrasound imaging. Other possible scanning methods are described, e.g., in U.S. Patent Application Publication No. 2007/0031791 (Cinader, Jr., et al.). The initial digital data set, which may include both raw data from scanning operations and data representing articles derived from the raw data, can be processed to segment an article design from any surrounding structures (e.g., a support for the article).

Often, machine-readable media are provided as part of a computing device. The computing device may have one or more processors, volatile memory (RAM), a device for reading machine-readable media, and input/output devices, such as a display, a keyboard, and a pointing device. Further, a computing device may also include other software, firmware, or combinations thereof, such as an operating system and other application software. A computing device may be, for example, a workstation, a laptop, a personal digital assistant (PDA), a server, a mainframe or any other general-purpose or application-specific computing device. A computing device may read executable software instructions from a computer-readable medium (such as a hard drive, a CD-ROM, or a computer memory), or may receive instructions from another source logically connected to computer, such as another networked computer.

In some embodiments, the method of making a three-dimensional article of the present disclosure comprises retrieving, from a (e.g., non-transitory) machine-readable medium, data representing a model of a desired three-dimensional article. The method further includes executing, by one or more processors interfacing with a manufacturing device, manufacturing instructions using the data; and generating, by the manufacturing device, the three-dimensional article.

FIG. 3 illustrates an embodiment of a system 2000 for carrying out some embodiments of the method according to the present disclosure. The system 2000 comprises a display 2062 that displays a model 2061 of a three-dimensional article; and one or more processors 2063 that, in response to the 3D model 2061 selected by a user, cause a manufacturing device 2065 to create the three-dimensional article 2017. Often, an input device 2064 (e.g., keyboard and/or mouse) is employed with the display 2062 and the at least one processor 2063, particularly for the user to select the model 2061.

Referring to FIG. 4, a processor 2163 (or more than one processor) is in communication with each of a machine-readable medium 2171 (e.g., a non-transitory medium), a manufacturing device 2165, and optionally a display 2162 for viewing by a user. The manufacturing device 2165 is configured to make one or more articles 2117 based on instructions from the processor 2163 providing data representing a model of the article 2117 from the machine-readable medium 2171.

A number of fused filament fabrication 3D printers may be useful for carrying out the method according to the present disclosure. Many of these are commercially available under the trade designation "FDM" from Stratasys, Inc., Eden Prairie, Minn., and subsidiaries thereof. Desktop 3D printers for idea and design development and larger printers for direct digital manufacturing can be obtained from Stratasys and its subsidiaries, for example, under the trade designations "MAKERBOT REPLICATOR", "UPRINT", "MOJO", "DIMENSION", and "FORTUS". Other 3D printers for fused filament fabrication are commercially available from, for example, 3D Systems, Rock Hill, S.C., and Airwolf 3D, Costa Mesa, Cal.

Other printers useful for practicing the present disclosure use input materials other than filaments. For example, such printers can use pellets or granules comprising the fluoropolymer and inorganic filler as input materials. Accordingly, other examples of printers useful for practicing the present disclosure are a commercially available Freeformer from Arburg, Lossburg, Germany, useful for carrying out a process known under the trade designation "ARBURG PLASTIC FREEFORMING (APF)", and those described in U.S. Pat. No. 8,292,610 (Hehl et al.).

FIG. 1 is a sectional view of an embodiment of an extrusion head 10 useful in the method of the present disclosure. Extrusion head 10 includes extrusion channel 12, heating block 14, and extrusion tip 16. Ports 18 in the heating block 14 may be useful, for example, for measurement and control of the temperature of the heating block 14 as needed. The extrusion head 10 can be a component, for example, of an extrusion-based layered deposition system, including those described in any of the above embodiments.

Extrusion channel 12 is a channel extending through heating block 14 for feeding a composition comprising a fluoropolymer and inorganic filler. In some embodiments, the composition introduced to the heating block 14 is a filament comprising the fluoropolymer and inorganic filler. Filaments may be introduced to the heating block 14 using a pinch roller mechanism, for example. In other embodiments, the composition introduced to the heating block 14 is in the form of pellets or granules, which may be introduced to the heating block 14 using a feed screw, for example. Heating block 14 is useful for at least partially melting the composition (in some embodiments, the filament) to a desired extrusion

viscosity based on a suitable thermal profile along heating block 14. The temperature of the heating block 14 can be adjusted based on the melting temperature or glass transition temperature and melt viscosity of at least the fluoropolymer in the composition. In some embodiments, the heating block is heated at a temperature of at least 180 °C, at least 200 °C, at least 220 °C, up to about 325 °C, 300 °C, or 275 °C. Examples of suitable heating blocks 14 include those commercially available in "FUSED DEPOSITION MODELING" systems under the trademark "FDM TITAN" from Stratasys, Inc.

Extrusion tip 16 is the tip extension of extrusion channel 12, which shears and extrudes the composition in molten form to make the three-dimensional article. The size and shape of the extrusion tip may be designed as desired for the size and shape of the extruded roads of the composition. Extrusion tip 16 has tip inner dimensions useful for depositing roads of the composition comprising the fluoropolymer and the inorganic filler, where the road widths and heights are based in part on the tip inner dimensions. In some embodiments, the extrusion tip has a round opening. In some of these embodiments, suitable tip inner diameters for extrusion tip 16 can range from about 100 micrometers to about 1000 micrometers. In some dimensions, the extrusion tip has a square or rectangular opening. In some of these embodiments, the extrusion tip can have at least one of a width or a thickness ranging from about 100 micrometers to about 1,000 micrometers.

The temperature of the substrate onto which the composition comprising a fluoropolymer and inorganic filler can be deposited may be room temperature or may be adjusted to promote the fusing of the roads of the deposited composition. In the method according to the present disclosure, the temperature of the substrate may be, for example, at least about 25 °C, 50 °C, 75 °C, 100 °C, 110 °C, 120 °C, 130 °C, or 140 °C up to 300 °C, 200 °C, 175 °C or 150 °C. The substrate can include a variety of useful materials. In some embodiments, the substrate comprises at least one of a fluoropolymer or a cotton denim cloth surface. Examples of useful fluoropolymers include any of the fluorothermoplastics described below.

In fabricating three-dimensional articles by depositing layers of the composition including fluoropolymer and inorganic filler, supporting layers or structures may be built underneath overhanging portions or in cavities of the three-dimensional articles that are not supported by the composition itself. A support structure may be built utilizing the same deposition techniques by which the composition comprising a fluoropolymer and inorganic filler is deposited. The host computer can generate additional structure acting as a support for the overhanging or free-space segments of the three-dimensional article being formed. Support material can then be deposited from a second extrusion tip according to the generated structure during the build process. Generally, the support material adheres to the composition during fabrication but is removable from the three-dimensional article when the build process is complete.

In contrast to other forming process such as injection molding, blow molding, and sheet extrusion, the three-dimensional article made according to the method disclosed herein may have a high surface roughness with vertical deviation of at least 0.01 millimeters (mm), particularly when a fused filament fabrication method is used to make the three-dimensional article. The rough surface has very regular appearance that may be useful or attractive in some applications. In situations where a smoother surface is desired, the initially formed rough grooved surface may be removed in subsequent operations, examples of which include sanding, peening, shot blasting, or laser peening.

The three-dimensional object prepared by the method according to the present disclosure may be an article useful in a variety of industries, for example, the aerospace, apparel, architecture, automotive, business machines products, consumer, defense, dental, electronics, educational institutions, heavy equipment, jewelry, medical, and toys industries.

The present disclosure provides compositions including at least one fluoropolymer and at least one inorganic filler that may be useful, for example, for melt extrusion additive manufacturing (in some embodiments, fused filament fabrication). The compositions can be in the form of filaments, pellets, or granules, for example.

Fluoropolymers useful for the compositions and methods disclosed herein include amorphous fluoropolymers and semi-crystalline fluorothermoplastics. Fluoropolymers useful for practicing the present disclosure can comprise interpolymerized units derived from at least one partially fluorinated or perfluorinated ethylenically unsaturated monomer represented by formula $R^aCF=CR^a_2$, wherein each $R^a$ is independently fluoro, chloro, bromo, hydrogen, a fluoroalkyl group (e.g. perfluoroalkyl having from 1 to 8, 1 to 4, or 1 to 3 carbon atoms and optionally interrupted by one or more oxygen atoms), a fluoroalkoxy group (e.g. perfluoroalkoxy having from 1 to 8, 1 to 4, or 1 to 3 carbon atoms, optionally interrupted by one or more oxygen atoms), alkyl having up to 10 carbon atoms, alkoxy having up to 8 carbon atoms, or aryl having up to 8 carbon atoms. Examples of useful fluorinated monomers represented by formula $R^aCF=CR^a_2$ include vinylidene fluoride (VDF), tetrafluoroethylene (TFE), hexafluoropropylene (HFP), chlorotrifluoroethylene, 2-chloropentafluoropropene, trifluoroethylene, vinyl fluoride, dichlorodifluoroethylene, 1,1-dichlorofluoroethylene, 1-hydropentafluoropropylene, 2-hydropentafluoropropylene, tetrafluoropropylene, perfluoroalkyl perfluorovinyl ethers, perfluoroalkyl perfluoroallyl ethers, and mixtures thereof.

In some embodiments, the fluoropolymer useful for practicing the present disclosure includes units from one or more monomers independently represented by formula $CF_2=CFORf$, wherein Rf is perfluoroalkyl having from 1 to 8, 1 to 4, or 1 to 3 carbon atoms, optionally interrupted by one or more -O- groups. Perfluoroalkoxyalkyl vinyl ethers suitable

for making a fluoropolymer include those represented by formula $CF_2=CF(OC_nF_{2n})_zORf_2$, in which each n is independently from 1 to 6, z is 1 or 2, and $Rf_2$ is a linear or branched perfluoroalkyl group having from 1 to 8 carbon atoms and optionally interrupted by one or more -O- groups. In some embodiments, n is from 1 to 4, or from 1 to 3, or from 2 to 3, or from 2 to 4. In some embodiments, n is 1 or 3. In some embodiments, n is 3. $C_nF_{2n}$ may be linear or branched. In some embodiments, $C_nF_{2n}$ can be written as $(CF_2)_n$, which refers to a linear perfluoroalkylene group. In some embodiments, $C_nF_{2n}$ is $-CF_2-CF_2-CF_2-$. In some embodiments, $C_nF_{2n}$ is branched, for example, $-CF_2-CF(CF_3)-$. In some embodiments, $(OC_nF_{2n})_z$ is represented by $-O-(CF_2)_{1-4}-[O(CF_2)_{1-4}]_{0-1}$. In some embodiments, $Rf_2$ is a linear or branched perfluoroalkyl group having from 1 to 8 (or 1 to 6) carbon atoms that is optionally interrupted by up to 4, 3, or 2 -O- groups. In some embodiments, $Rf_2$ is a perfluoroalkyl group having from 1 to 4 carbon atoms optionally interrupted by one -O- group. Suitable monomers represented by formula $CF_2=CFORf$ and $CF_2=CF(OC_nF_{2n})_zORf_2$ include perfluoromethyl vinyl ether, perfluoroethyl vinyl ether, perfluoropropyl vinyl ether, $CF_2=CFOCF_2OCF_3$, $CF_2=CFOCF_2OCF_2CF_3$, $CF_2=CFOCF_2CF_2OCF_3$, $CF_2=CFOCF_2CF_2CF_2OCF_3$, $CF_2=CFOCF_2CF_2CF_2CF_2OCF_3$, $CF_2=CFOCF_2CF_2OCF_2CF_3$, $CF_2=CFOCF_2CF_2CF_2OCF_2CF_3$, $CF_2=CFOCF_2CF_2CF_2CF_2OCF_2CF_3$, $CF_2-CFOCF_2CF_2OCF_2OCF_3$, $CF_2=CFOCF_2CF_2OCF_2CF_2OCF_3$, $CF_2=CFOCF_2CF_2OCF_2CF_2CF_2OCF_3$, $CF_2=CFOCF_2CF_2OCF_2CF_2CF_2CF_2OCF_3$, $CF_2=CFOCF_2CF_2OCF_2CF_2CF_2CF_2CF_2OCF_3$, $CF_2=CFOCF_2CF_2(OCF_2)_3OCF_3$, $CF_2=CFOCF_2CF_2(OCF_2)_4OCF_3$, $CF_2=CFOCF_2CF_2OCF_2OCF_2OCF_3$, $CF_2=CFOCF_2CF_2OCF_2CF_2CF_3$ $CF_2=CFOCF_2CF_2OCF_2CF_2OCF_2CF_2CF_3$, $CF_2=CFOCF_2CF(CF_3)-O-C_3F_7$ (PPVE-2), $CF_2=CF(OCF_2CF(CF_3))_2-O-C_3F_7$ (PPVE-3), and $CF_2=CF(OCF_2CF(CF_3))_3-O-C_3F_7$ (PPVE-4). Many of these perfluoroalkoxyalkyl vinyl ethers can be prepared according to the methods described in U.S. Pat. Nos. 6,255,536 (Worm et al.) and 6,294,627 (Worm et al.).

Perfluoroalkyl alkene ethers and perfluoroalkoxyalkyl alkene ethers may also be useful for making a fluoropolymer for the composition, method, and use according to the present disclosure. In addition, the fluoropolymers may include interpolymerized units of fluoro (alkene ether) monomers, including those described in U.S. Pat. Nos. 5,891,965 (Worm et al.) and 6,255,535 (Schulz et al.). Such monomers include those represented by formula $CF_2=CF(CF_2)_m-O-R_f$, wherein m is an integer from 1 to 4, and wherein Rf is a linear or branched perfluoroalkylene group that may include oxygen atoms thereby forming additional ether linkages, and wherein Rf contains from 1 to 20, in some embodiments from 1 to 10, carbon atoms in the backbone, and wherein Rf also may contain additional terminal unsaturation sites. In some embodiments, m is 1. Suitable perfluoroalkoxyalkyl allyl ethers include those represented by formula $CF_2=CFCF_2(OC_nF_{2n})_zORf_2$, in which n, z, and $Rf_2$ are as defined above in any of the embodiments of perfluoroalkoxyalkyl vinyl ethers. Examples of suitable perfluoroalkoxyalkyl allyl ethers include $CF_2=CFCF_2OCF_2CF_2OCF_3$, $CF_2=CFCF_2OCF_2CF_2CF_2OCF_3$, $CF_2=CFCF_2OCF_2OCF_3$, $CF_2=CFCF_2OCF_2OCF_2CF_3$, $CF_2=CFCF_2OCF_2CF_2CF_2CF_2OCF_3$, $CF_2=CFCF_2OCF_2CF_2OCF_2CF_3$, $CF_2=CFCF_2OCF_2CF_2CF_2OCF_2CF_3$, $CF_2=CFCF_2OCF_2CF_2CF_2CF_2OCF_2CF_3$, $CF_2=CFCF_2OCF_2CF_2OCF_2OCF_3$, $CF_2=CFCF_2OCF_2CF_2OCF_2CF_2OCF_3$, $CF_2=CFCF_2OCF_2CF_2OCF_2CF_2CF_2OCF_3$, $CF_2=CFCF_2OCF_2CF_2OCF_2CF_2CF_2CF_2OCF_3$, $CF_2=CFCF_2OCF_2CF_2OCF_2CF_2CF_2CF_2CF_2OCF_3$, $CF_2=CFCF_2OCF_2CF_2(OCF_2)_3OCF_3$, $CF_2=CFCF_2OCF_2CF_2(OCF_2)_4OCF_3$, $CF_2=CFCF_2OCF_2CF_2OCF_2OCF_2OCF_3$, $CF_2=CFCF_2OCF_2CF_2OCF_2CF_2CF_3$, $CF_2=CFCF_2OCF_2CF_2OCF_2CF_2OCF_2CF_2CF_3$, $CF_2=CFCF_2OCF_2CF(CF_3)-O-C_3F_7$, and $CF_2=CFCF_2(OCF_2CF(CF_3))_2-O-C_3F_7$. Many of these perfluoroalkoxyalkyl allyl ethers can be prepared, for example, according to the methods described in U.S. Pat. No. 4,349,650 (Krespan).

Fluoropolymers useful for practicing the present disclosure may also comprise interpolymerized units derived from the interpolymerization of at least one monomer $R^aCF=CR^a_2$ with at least one non-fluorinated, copolymerizable comonomer represented by formula $R^b_2C=CR^b_2$, wherein each $R^b$ is independently hydrogen, chloro, alkyl having from 1 to 8, 1 to 4, or 1 to 3 carbon atoms, a cyclic saturated alkyl group having from 1 to 10, 1 to 8, or 1 to 4 carbon atoms, or an aryl group of from 1 to 8 carbon atoms, or represented by formula $CH_2=CHR^{10}$, wherein $R^{10}$ is a hydrogen or alkyl. In some embodiments, $R^{10}$ is alkyl having up to 10 carbon atoms or from one to six carbon atoms. Examples of useful monomers represented by these formulas include ethylene and propylene.

Perfluoro-1,3-dioxoles may also be useful to prepare a fluoropolymer useful for practicing the present disclosure. Perfluoro-1,3-dioxole monomers and their copolymers are described in U. S. Pat. No. 4,558, 141 (Squire).

In some embodiments, the fluoropolymer useful for practicing the present disclosure is amorphous. Amorphous fluoropolymers typically do not exhibit a melting point and exhibit little or no crystallinity at room temperature. Useful amorphous fluoropolymers can have glass transition temperatures below room temperature or up to 280 °C. Suitable amorphous fluoropolymers can have glass transition temperatures in a range from -60 °C up to 280 °C, -60 °C up to 250 °C, from -60 °C to 150 °C, from -40 °C to 150 °C, from -40 °C to 100 °C, from -40 °C to 20 °C, from 80 °C to 280 °C, from 80 °C to 250 °C, or from 100 °C to 250 °C.

In some embodiments, useful amorphous fluoropolymers include copolymers of VDF with at least one terminally unsaturated fluoromonoolefin represented by formula $R^aCF=CR^a_2$ containing at least one fluorine atom on each double-bonded carbon atom. Examples of comonomers that can be useful with VDF include HFP, chlorotrifluoroethylene, 1-hydropentafluoropropylene, and 2-hydropentafluoropropylene. Other examples of amorphous fluoropolymers useful for practicing the present disclosure include copolymers of VDF, TFE, and HFP or 1- or 2-hydropentafluoropropylene and

copolymers of TFE, propylene, and, optionally, VDF. Such fluoropolymers are described in U.S. Pat. Nos. 3,051,677 (Rexford) and 3,318,854 (Honn, et al.) for example. In some embodiments, the amorphous fluoropolymer is a copolymer of HFP, VDF and TFE. Such fluoropolymers are described in U.S. Pat. No. 2,968,649 (Pailthorp et al.), for example.

Amorphous fluoropolymers including interpolymerized units of VDF and HFP typically have from 30 to 90 percent by weight VDF units and 70 to 10 percent by weight HFP units. Amorphous fluoropolymers including interpolymerized units of TFE and propylene typically have from about 50 to 80 percent by weight TFE units and from 50 to 20 percent by weight propylene units. In some embodiments, the amorphous fluoropolymer has less than 50 percent by weight interpolymerized units of VDF. In some embodiments, the amorphous fluoropolymer has less than 49, 45, 40, 35, 30, 25, 20, 15, or 10 percent by weight interpolymerized units of VDF. Amorphous fluoropolymers including interpolymerized units of TFE, VDF, and propylene typically have from about 45 to 80 percent by weight TFE units, 5 to 40 percent by weight VDF units, and from 10 to 25 percent by weight propylene units. Those skilled in the art are capable of selecting specific interpolymerized units at appropriate amounts to form an amorphous fluoropolymer. In some embodiments, polymerized units derived from non-fluorinated olefin monomers are present in the amorphous fluoropolymer at up to 25 mole percent of the fluoropolymer, in some embodiments up to 10 mole percent or up to 3 mole percent. In some embodiments, polymerized units derived from at least one of perfluoroalkyl vinyl ether or perfluoroalkoxyalkyl vinyl ether monomers are present in the amorphous fluoropolymer at up to 50 mole percent of the fluoropolymer, in some embodiments up to 30 mole percent or up to 10 mole percent.

In some embodiments, amorphous fluoropolymers useful for practicing the present disclosure include a TFE/propylene copolymer, a TFE/propylene/VDF copolymer, a VDF/HFP copolymer, a TFE/VDF/HFP copolymer, a TFE/ perfluoromethyl vinyl ether (PMVE) copolymer, a TFE/$CF_2$=$CFOC_3F_7$ copolymer, a TFE/$CF_2$=$CFOCF_3$/$CF_2$=$CFOC_3F_7$ copolymer, a TFE/ethyl vinyl ether (EVE) copolymer, a TFE/butyl vinyl ether (BVE) copolymer, a TFE/EVE/BVE copolymer, a VDF/$CF_2$=$CFOC_3F_7$ copolymer, an ethylene/HFP copolymer, a TFE/ HFP copolymer, a CTFE/VDF copolymer, a TFE/VDF copolymer, a TFE/VDF/PMVE/ethylene copolymer, or a TFE/VDF/$CF_2$=$CFO(CF_2)_3OCF_3$ copolymer.

Amorphous fluoropolymers useful for practicing the present disclosure also include those having glass transition temperatures in a range from 80 °C to 280 °C, from 80 °C to 250 °C, or from 100 °C to 250 °C. Examples of such fluoropolymers include copolymers of perfluorinated 1,3-dioxoles optionally substituted by perfluoro$C_{1-4}$alkyl or perfluoro$C_{1-4}$alkoxy with at least one compound of formula $R^aCF=CR^a_2$, in some embodiments, TFE. Examples of perfluorinated 1,3-dioxoles suitable for making amorphous fluoropolymers include 2,2-bis(trifluoromethyl)-4,5-difluoro-1,3-dioxole, 2,2-bis(trifluoromethyl)-4-fluoro-5-trifluoromethoxy-1,3-dioxole, 2,4,5-trifluoro-2-trifluoromethyl-1,3-dioxole, 2,2,4,5-tetrafluoro-1,3-dioxole, and 2,4,5-trifluoro-2-pentafluoroethyl-1,3-dioxole. Some of these amorphous polymers are commercially available, for example, from The Chemours Company, Wilmington, Del., under the trade designation "TEFLON AF" and from Solvay, Brussels, Belgium, under the trade designation "HYFLON AD". Other useful amorphous fluoropolymers include poly(perfluoro-4-vinyloxy-1-butene), which is commercially available under the trade designation "CYTOP" from Asahi Glass, Tokyo, Japan, and poly(perfluoro-4-vinyloxy-3-methyl-1-butene). Several perfluoro-2-methylene-1,3-dioxolanes can be homopolymerized or copolymerized with each other and/or with compounds represented by formula $R^aCF=CR^a_2$ to provide useful amorphous fluoropolymers. Suitable perfluoro-2-methylene-1,3-dioxolane may be unsubstituted, substituted by at least one of perfluoro$C_{1-4}$alkyl or perfluoro$C_{1-4}$alkoxy$C_{1-4}$alkyl, or fused to a 5- or 6-membered perfluorinated ring, optionally containing an oxygen atom. One example of a useful substituted perfluoro-2-methylene-1,3-dioxolanes is poly(perfluoro-2-methylene-4-methyl-1,3-dioxolane. Further examples and details about these amorphous fluoropolymers can be found in "Amorphous Fluoropolymers" by Okamot, et al., Chapter 16 in Handbook of Fluoropolymer Science and Technology, First Edition, Ed. Smith, D.W., Iacono, S.T., and Iyer, S., 2014, pp. 377 to 391.

In some embodiments, amorphous fluoropolymers have a glass transition temperature of up to 50 °C and have a Mooney viscosity in a range from 1 to 100 (ML 1+10) at 121 °C. Mooney viscosity is determined using ASTM D1646-06 Part A by a MV 2000 instrument (available from Alpha Technologies, Ohio, USA) using a large rotor (ML 1+10) at 121 °C. Mooney viscosities specified above are in Mooney units.

In some embodiments, components useful for preparing an amorphous fluoropolymer further include a fluorinated bisolefin compound represented by the following formula:

$$CY_2=CX-(CF_2)_a-(O-CF_2-CF(Z)-)_b-O-(CF_2)_c-(O-CF(Z)-CF_2)_d-(O)_e-(CF(A))_f-CX=CY_2,$$

wherein a is an integer selected from 0, 1, and 2; b is an integer selected from 0, 1, and 2; c is an integer selected from 0, 1, 2, 3, 4, 5, 6, 7, and 8; d is an integer selected from 0, 1, and 2; e is 0 or 1; f is an integer selected from 0, 1, 2, 3, 4, 5, and 6; Z is independently selected from F and $CF_3$; A is F or a perfluorinated alkyl group; X is independently H or F; and Y is independently selected from H, F, and $CF_3$. In a preferred embodiment, the highly fluorinated bisolefin compound is perfluorinated, meaning that X and Y are independently selected from F and $CF_3$. Examples of useful fluorinated bisolefin compounds include: $CF_2=CF-O-(CF_2)_2-O-CF=CF_2$, $CF_2=CF-O-(CF_2)_3-O-CF=CF_2$, $CF_2=CF-O-(CF_2)_4-O-CF=CF_2$, $CF_2=CF-O-(CF_2)_5-O-CF=CF_2$, $CF_2=CF-O-(CF_2)_6-O-CF=CF_2$, $CF_2=CF-CF_2-O-(CF_2)_2-O-CF=CF_2$, $CF_2=CF-CF_2-O-(CF_2)_3-O-CF=CF_2$, $CF_2=CF-CF_2-O-(CF_2)_4-O-CF=CF_2$, $CF_2=CF-CF_2-O-(CF_2)_5-O-CF=CF_2$,

$CF_2$=CF- $CF_2$-O-$(CF_2)_6$-O-CF=$CF_2$, $CF_2$=CF-$CF_2$-O-$(CF_2)_2$-O-$CF_2$-CF=$CF_2$, $CF_2$=CF-$CF_2$-O-$(CF_2)_3$-O-$CF_2$-CF=$CF_2$, $CF_2$=CF-$CF_2$-O-$(CF_2)_4$-O-$CF_2$-CF=$CF_2$, $CF_2$=CF-$CF_2$-O-$(CF_2)_5$-O-$CF_2$-CF=$CF_2$, $CF_2$=CF-$CF_2$-O-$(CF_2)_6$-O-$CF_2$-CF=$CF_2$, $CF_2$=CF-O-$CF_2CF_2$-CH=$CH_2$, $CF_2$=CF-($OCF_2CF(CF_3)$)-O-$CF_2CF_2$-CH=$CH_2$, $CF_2$=CF-$(OCF_2CF(CF_3))_2$-O-$CF_2CF_2$-CH=$CH_2$, $CF_2$=CF $CF_2$-O-$CF_2CF_2$-CH=$CH_2$, $CF_2$=CF $CF_2$-($OCF_2CF(CF_3)$)-O-$CF_2CF_2$-CH=$CH_2$, $CF_2$=$CFCF_2$-$(OCF_2CF(CF_3))_2$-O-$CF_2CF_2$-CH=$CH_2$, $CF_2$=CF-$CF_2$-CH=$CH_2$, $CF_2$=CF-O-$(CF_2)_c$-O-$CF_2$-$CF_2$-CH=$CH_2$ wherein c is an integer selected from 2 to 6, $CF_2$=$CFCF_2$-O-$(CF_2)_c$-O-$CF_2$-$CF_2$-CH=$CH_2$ wherein c is an integer selected from 2 to 6, $CF_2$=CF-$(OCF_2CF(CF_3))_b$-O-$CF(CF_3)$-CH=$CH_2$ wherein b is 0, 1, or 2, $CF_2$=CF-$CF_2$-$(OCF_2CF(CF_3))_b$-O-$CF(CF_3)$-CH=$CH_2$ wherein b is 0, 1, or 2, $CH_2$=CH-$(CF_2)_n$-O-CH=$CH_2$ wherein n is an integer from 1-10, and $CF_2$=CF-$(CF_2)_a$-$(O-CF_2CF(CF_3))_b$-O-$(CF_2)_c$-$(OCF(CF_3)CF_2)_f$-O-CF=$CF_2$ wherein a is 0 or 1, b is 0, 1, or 2, c is 1, 2, 3, 4, 5, or 6, and f is 0, 1, or 2. In some embodiments, the fluorinated bisolefin compound is $CF_2$=CF-O-$(CF_2)_n$-O-CF=$CF_2$ where n is an integer from 2-6; $CF_2$=CF-$(CF_2)_a$-O-$(CF_2)_n$-O-$(CF_2)_b$-CF=$CF_2$ where n is an integer from 2-6 and a and b are 0 or 1; or a perfluorinated compound comprising a perfluorinated vinyl ether and a perfluorinated allyl ether. Useful amounts of the fluorinated bisolefin include 0.01 mol % to 1 mol % of the fluorinated bisolefin compound based on total moles of monomer incorporated. In some embodiments, at least 0.02, 0.05, or even 0.1 mol % of the fluorinated bisolefin compound is used and at most 0.5, 0.75, or even 0.9 mol % of a compound of the fluorinated bisolefin compound is used based on the total moles of monomer incorporated into the amorphous polymer.

In some embodiments, the amorphous fluoropolymer useful in the composition and method of the present disclosure includes polymerized units comprising a cure site. In these embodiments, cure site monomers may be useful during the polymerization to make the amorphous fluoropolymer. Such cure site monomers include those monomers capable of free radical polymerization. The cure site monomer can be perfluorinated to ensure adequate thermal stability of the resulting elastomer. Examples of useful cure sites include a Br cure site, an I cure site, a nitrile cure site, a carbon-carbon double bond, and combinations thereof. Any of these cure sites can be cured using peroxides as described below. However, in some cases in which multiple, different cure sites are present a dual cure system or a multi cure system may be useful. Other suitable cure systems that may be useful include bisphenol curing systems or triazine curing systems.

In some embodiments, the cure site monomer comprises an iodine capable of participating in a peroxide cure reaction, where, for example, the iodine atom capable of participating in the peroxide cure reaction is located at a terminal position of the backbone chain. One example of a useful fluorinated iodine containing cure site monomer is represented by the following formula:

$$CY_2=CX-(CF_2)_g-(O-CF_2CF(CF_3)-)_h-O-(CF_2)_i-(O)_j-(CF_2)_k-CF(I)-X \qquad (IV)$$

wherein X and Y are independently selected from H, F, and $CF_3$; g is 0 or 1; h is an integer selected from 0, 2, and 3; i is an integer selected from 0, 1, 2, 3, 4, and 5; j is 0 or 1; and k is an integer selected from 0, 1, 2, 3, 4, 5, and 6. In one in embodiment, the fluorinated iodine containing cure site monomer is perfluorinated. Examples of suitable compounds of Formula (IV) include: $CF_2$=$CFOC_4F_8I$ (MV4I), $CF_2$=$CFOC_2F_4I$, $CF_2$=$CFOCF_2CF(CF_3)OC_2F_4I$, $CF_2$=CF-$(OCF_2CF(CF_3))_2$-O-$C_2F_4I$, $CF_2$=CF-O-$CF_2CFI$-$CF_3$, $CF_2$=CF-O-$CF_2CF(CF_3)$-O-$CF_2CFI$-$CF_3$, $CF_2$=CF-O-$(CF_2)_2$-O-$C_2F_4I$, $CF_2$=CF-O-$(CF_2)_3$-O-$C_2F_4I$, $CF_2$=CF-O-$(CF_2)_4$-O-$C_2F_4I$, $CF_2$=CF-O-$(CF_2)_5$-O-$C_2F_4I$, $CF_2$=CF-O-$(CF_2)_6$-O-$C_2F_4I$, $CF_2$=CF-$CF_2$-O-$CF_2$-O-$C_2F_4I$, $CF_2$=CF-$CF_2$-O-$(CF_2)_2$-O-$C_2F_4I$, $CF_2$=CF-$CF_2$-O-$(CF_2)_3$-O-$C_2F_4I$, $CF_2$=CF-$CF_2$-O-$(CF_2)_4$-O-$C_2F_4I$, $CF_2$=CF-$CF_2$-O-$(CF_2)_5$-O-$C_2F_4I$, $CF_2$=CF-$CF_2$-O-$(CF_2)_6$-O-$C_2F_4I$, $CF_2$=CF-$CF_2$-O-$C_4F_8I$, $CF_2$=CF-$CF_2$-O-$C_2F_4I$, $CF_2$=CF-$CF_2$-O-$CF_2CF(CF_3)$-O-$C_2F_4I$, $CF_2$=CF-$CF_2$-$(OCF_2CF(CF_3))_2$-O-$C_2F_4I$, $CF_2$=CF-$CF_2$-O-$CF_2CFI$-$CF_3$, $CF_2$=CF-$CF_2$-O-$CF_2CF(CF_3)$-O-$CF_2CFI$-$CF_3$, and combinations thereof. In some embodiments, the cure site monomer comprises at least one of $CF_2$=$CFOC_4F_8I$; $CF_2$=$CFCF_2OC_4F_8I$; $CF_2$=$CFOC_2F_4I$; $CF_2$=$CFCF_2OC_2F_4I$; $CF_2$=CF-O-$(CF_2)_n$-O-$CF_2$-$CF_2I$, or $CF_2$=$CFCF_2$-O-$(CF_2)_n$-O-$CF_2$-$CF_2I$ wherein n is an integer selected from 2, 3, 4, or 6. Examples of other useful cure site monomers include bromo- or iodo- (per)fluoroalkyl-(per)fluorovinylethers having the formula ZRf-O-CX=$CX_2$, wherein each X may be the same or different and represents H or F, Z is Br or I, Rf is a $C_1$-$C_{12}$ (per)fluoroalkylene, optionally containing chlorine and/or ether oxygen atoms. Suitable examples include $ZCF_2$-O-CF=$CF_2$, $ZCF_2CF_2$-O-CF=$CF_2$, $ZCF_2CF_2CF_2$-O-CF=$CF_2$, $CF_3CFZCF_2$-O-CF=$CF_2$, wherein Z represents Br or I. Still other examples of useful cure site monomers include bromo- or iodo (per)fluoroolefins such as those having the formula Z'-$(Rf')_r$-CX=$CX_2$, wherein each X independently represents H or F, Z' is Br or I, Rf is a $C_1$-$C_{12}$ perfluoroalkylene, optionally containing chlorine atoms and r is 0 or 1. Suitable examples include bromo- or iodo-trifluoroethene, 4-bromo-perfluorobutene-1,4-iodo-perfluorobutene-1, or bromo- or iodo-fluoroolefins such as 1-iodo-2,2-difluroroethene, 1-bromo-2,2-difluoroethene, 4-iodo-3,3,4,4,-tetrafluorobutene-1 and 4-bromo-3,3,4,4-tetrafluorobutene-1. Non-fluorinated bromo and iodo-olefins such as vinyl bromide, vinyl iodide, 4-bromo-1-butene and 4-iodo-1-butene may also be useful as cure site monomers.

Useful amounts of the compound of Formula (IV) and the other cure site monomers described above include 0.01 mol % to 1 mol %, based on total moles of monomer incorporated may be used. In some embodiments, at least 0.02, 0.05, or even 0.1 mol % of a cure site monomer is used and at most 0.5, 0.75, or even 0.9 mol % of a cure site

monomer is used based on the total moles of monomer incorporated into the amorphous fluoropolymer.

In some embodiments of the amorphous fluoropolymer useful in the composition and method of the present disclosure includes a nitrile cure site. Nitrile cure sites can be introduced into the polymer by using nitrile containing monomers during the polymerization. Examples of suitable nitrile containing monomers include those represented by formulas $CF_2$=CF-$CF_2$-O-Rf-CN; $CF_2$=CFO($CF_2$)$_r$CN; $CF_2$=CFO[$CF_2$CF($CF_3$)O]$_p$($CF_2$)$_v$OCF($CF_3$)CN; and $CF_2$=CF[O$CF_2$CF($CF_3$)]$_k$O($CF_2$)$_u$CN, wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include perfluoro (8-cyano-5-methyl-3,6-dioxa-1-octene), $CF_2$=CFO($CF_2$)$_5$CN, and $CF_2$=CFO($CF_2$)$_3$OCF($CF_3$)CN. Typically these cure-site monomers, if used, are used in amounts of at least 0.01, 0.02, 0.05, or 0.1 mol % and at most 0.5, 0.75, 0.9, or 1 mol % based on the total moles of monomer incorporated into the amorphous fluoropolymer.

If the amorphous fluoropolymer is perhalogenated, in some embodiments perfluorinated, typically at least 50 mole percent (mol %) of its interpolymerized units are derived from TFE and/or CTFE, optionally including HFP. The balance of the interpolymerized units of the amorphous fluoropolymer (e.g., 10 to 50 mol %) is made up of one or more perfluoroalkyl vinyl ethers and/or perfluoroalkoxyalkyl vinyl ethers and/or perfluoroallyl ethers and/or perfluoroalkoxyallyl ethers, and, in some embodiments, a cure site monomer. If the fluoropolymer is not perfluorinated, it typically contains from about 5 mol % to about 90 mol % of its interpolymerized units derived from TFE, CTFE, and/or HFP; from about 5 mol % to about 90 mol % of its interpolymerized units derived from VDF, ethylene, and/or propylene; up to about 40 mol % of its interpolymerized units derived from a vinyl ether; and from about 0.1 mol % to about 5 mol %, in some embodiments from about 0.3 mol % to about 2 mol %, of a cure site monomer.

In some embodiments, the fluoropolymer useful for practicing the present disclosure is a semi-crystalline fluorothermoplastic. Useful semi-crystalline fluoropolymers are melt processable with melt flow indexes of fully-fluorinated polymers in a range from 0.01 grams per ten minutes to 10,000 grams per ten minutes (5 kg/372 °C) and melt flow indexes of partially-fluorinated polymers in a range from 0.1 grams per ten minutes to 10,000 grams per ten minutes (5 kg/297 °C). Suitable semi-crystalline fluoropolymers can have melting points in a range from 50 °C up to 325 °C, from 100 °C to 325 °C, from 150 °C to 325 °C, from 100 °C to 300 °C, or from 80 °C to 290 °C. Homopolymers of TFE and copolymers of TFE including less than one percent of a comonomer are not melt processable and cannot be extruded using the method of the present disclosure. Accordingly, the fluoropolymer useful for practicing the present disclosure is not polytetrafluoroethylene homopolymer. The semi-crystalline fluorothermoplastic has less than 50 percent by weight interpolymerized units of VDF. In some embodiments, the semi-crystalline fluorothermoplastic has less than 49, 45, 40, 35, 30, 25, 20, 15, or 10 percent by weight interpolymerized units of VDF.

Examples of suitable semi-crystalline fluorinated thermoplastic polymers include fluoroplastics comprising interpolymerized units of TFE. In some embodiments, the semi-crystalline fluorinated thermoplastic polymer includes at least 25, 30, 35, 40, 45, 50, 55, or 60 percent by weight interpolymerized units of TFE. An example of a useful fluoroplastic is a fluoroplastic having interpolymerized units derived solely from (i) TFE and (ii) more than 5 weight percent of one or more ethylenically unsaturated copolymerizable fluorinated monomers other than TFE. Copolymers of TFE and HFP with or without other perfluorinated comonomers are known in the art as FEP's (fluorinated ethylene propylene). In some embodiments, these fluoroplastics are derived from copolymerizing 30 to 70 wt. % TFE, 10 to 30 wt. %, HFP, and 5 to 50 wt. % of a third ethylenically unsaturated fluorinated comonomer other than TFE and HFP. For example, such a fluoropolymer may be derived from copolymerization of a monomer charge of TFE (e.g., in an amount of 45 to 65 wt. %), HFP (e.g., in an amount of 10 to 30 wt. %), and VDF (e.g., in an amount of 15 to 35 wt. %). Copolymers of TFE, HFP and vinylidenefluoride (VDF) are known in the art as THV. Another example of a useful fluoroplastic is a fluoroplastic derived from copolymerization of a monomer charge of TFE (e.g., from 45 to 70 wt %), HFP (e.g., from 10 to 20 wt %), and an alpha olefin hydrocarbon ethylenically unsaturated comonomer having from 1 to 3 carbon atoms, such as ethylene or propylene (e.g., from 10 to 20 wt. %). In some embodiments, the semi-crystalline thermoplastic comprises interpolymerized units of TFE, HFP, and ethylene. Another example of a useful fluoroplastic is a fluoroplastic derived from TFE and an alpha olefin hydrocarbon ethylenically unsaturated comonomer. Examples of polymers of this subclass include a copolymer of TFE and propylene and a copolymer of TFE and ethylene (known as ETFE). Such copolymers are typically derived by copolymerizing from 50 to 95 wt. %, in some embodiments, from 85 to 90 wt. %, of TFE with from 50 to 15 wt. %, in some embodiments, from 15 to 10 wt. %, of the comonomer.

In some embodiments, the semi-crystalline fluorinated thermoplastic is a copolymer of a fluorinated olefin and at least one of a fluorinated vinyl ether or fluorinated allyl ether. In some of these embodiments, the fluorinated olefin is TFE. Copolymers of TFE and perfluorinated alkyl or allyl ethers are known in the art as PFA's (perfluorinated alkoxy polymers). In these embodiments, the fluorinated vinyl ether or fluorinated allyl ether units are present in the copolymer in an amount in a range from 0.01 mol% to 15 mol%, in some embodiments, 0.01 mol% to 10 mol%, and in some embodiments, 0.05 mol% to 5 mol%. The fluorinated vinyl ether or fluorinated allyl ether may be any of those described above. In some embodiments, the fluorinated vinyl ether comprises at least one of perfluoro (methyl vinyl) ether (PMVE), perfluoro (ethyl vinyl) ether (PEVE), perfluoro (n-propyl vinyl) ether (PPVE-1), perfluoro-2-propoxypropylvinyl ether

(PPVE-2), perfluoro-3-methoxy-n-propylvinyl ether, perfluoro-2-methoxy-ethylvinyl ether, or $CF_3-(CF_2)_2-O-CF(CF_3)-CF_2-O-CF(CF_3)-CF_2-O-CF=CF_2$.

Semi-crystalline fluorinated thermoplastics described above in any of their embodiments may be prepared with or without cure site monomers as described above in any of their embodiments.

Fluoropolymers useful for practicing the present disclosure, including amorphous and semi-crystalline fluoropolymers described in any of the above embodiments, are commercially available and/or can be prepared by a sequence of steps, which can include polymerization, coagulation, washing, and drying. In some embodiments, an aqueous emulsion polymerization can be carried out continuously under steady-state conditions. For example, an aqueous emulsion of monomers (e.g,. including any of those described above), water, emulsifiers, buffers and catalysts can be fed continuously to a stirred reactor under optimum pressure and temperature conditions while the resulting emulsion or suspension is continuously removed. In some embodiments, batch or semibatch polymerization is conducted by feeding the aforementioned ingredients into a stirred reactor and allowing them to react at a set temperature for a specified length of time or by charging ingredients into the reactor and feeding the monomers into the reactor to maintain a constant pressure until a desired amount of polymer is formed. After polymerization, unreacted monomers are removed from the reactor effluent latex by vaporization at reduced pressure. The fluoropolymer can be recovered from the latex by coagulation.

The polymerization is generally conducted in the presence of a free radical initiator system, such as ammonium persulfate, potassium permanganate, AIBN, or bis(perfluoroacyl) peroxides. The polymerization reaction may further include other components such as chain transfer agents and complexing agents. The polymerization is generally carried out at a temperature in a range from 10 °C and 100 °C, or in a range from 30 °C and 80 °C. The polymerization pressure is usually in the range of 0.3 MPa to 30 MPa, and in some embodiments in the range of 2 MPa and 20 MPa.

When conducting emulsion polymerization, perfluorinated or partially fluorinated emulsifiers may be useful. Generally these fluorinated emulsifiers are present in a range from about 0.02% to about 3% by weight with respect to the polymer. An example of a useful fluorinated emulsifier is represented by formula:

Y-Rf-Z-M

wherein Y represents hydrogen, Cl or F; Rf represents a linear or branched perfluorinated alkylene having 4 to 10 carbon atoms; Z represents $COO^-$ or $SO_3^-$ and M represents an alkali metal ion or an ammonium ion. Such fluorinated surfactants include fluorinated alkanoic acid and fluorinated alkanoic sulphonic acids and salts thereof, such as ammonium salts of perfluorooctanoic acid and perfluorooctane sulphonic acid. Also contemplated for use in the preparation of the polymers described herein are fluorinated emulsifiers represented by formula:

$[Rf-O-L-COO-]_iX^{i+}$

wherein L represents a linear partially or fully fluorinated alkylene group or an aliphatic hydrocarbon group, Rf represents a linear partially or fully fluorinated aliphatic group or a linear partially or fully fluorinated group interrupted with one or more oxygen atoms, $X^{i+}$ represents a cation having the valence i and i is 1,2 and 3. In one embodiment, the emulsifier is selected from $CF_3-O-(CF_2)_3-O-CHF-CF_2-C(O)OH$ and salts thereof. Specific examples are described in US 2007/0015937. Other examples of useful emulsifiers include: $CF_3CF_2OCF_2CF_2OCF_2COOH$, $CHF_2(CF_2)_5COOH$, $CF_3(CF_2)_6COOH$, $CF_3O(CF_2)_3OCF(CF_3)COOH$, $CF_3CF_2CH_2OCF_2CH_2OCF_2COOH$, $CF_3O(CF_2)_3OCHFCF_2COOH$, $CF_3O(CF_2)_3OCF_2COOH$, $CF_3(CF_2)_3(CH_2CF_2)_2CF_2CF_2CF_2COOH$, $CF_3(CF_2)_2CH_2(CF_2)_2COOH$, $CF_3(CF_2)_2COOH$, $CF_3(CF_2)_2(OCF(CF_3)CF_2)OCF(CF_3)COOH$, $CF_3(CF_2)_2(OCF_2CF_2)_4OCF(CF_3)COOH$, $CF_3CF_2O(CF_2CF_2O)_3CF_2COOH$, and their salts. Also contemplated for use in the preparation of the fluorinated polymers described herein are fluorinated polyether surfactants, such as described in U.S. Pat. No. 6,429,258.

Polymer particles produced with a fluorinated emulsifier typically have an average diameter, as determined by dynamic light scattering techniques, in range of about 10 nanometers (nm) to about 300 nm, and in some embodiments in range of about 50 nm to about 200 nm. If desired, the emulsifiers can be removed or recycled from the fluoropolymer latex as described in U.S. Pat. Nos. 5,442,097 to Obermeier et al., 6,613,941 to Felix et al., 6,794,550 to Hintzer et al., 6,706,193 to Burkard et al. and 7,018,541 to Hintzer et al. In some embodiments, the polymerization process may be conducted with no emulsifier (e.g., no fluorinated emulsifier). Polymer particles produced without an emulsifier typically have an average diameter, as determined by dynamic light scattering techniques, in a range of about 40 nm to about 500 nm, typically in range of about 100 nm and about 400 nm, and suspension polymerization will typically produce particles sizes up to several millimeters.

In some embodiments, a water soluble initiator can be useful to start the polymerization process. Salts of peroxy sulfuric acid, such as ammonium persulfate, are typically applied either alone or sometimes in the presence of a reducing agent, such as bisulfites or sulfinates (e.g., fluorinated sulfinates disclosed in U.S. Pat. Nos. 5,285,002 and 5,378,782 both to Grootaert) or the sodium salt of hydroxy methane sulfinic acid (sold under the trade designation "RONGALIT",

BASF Chemical Company, New Jersey, USA). Most of these initiators and emulsifiers have an optimum pH-range where they show most efficiency. For this reason, buffers are sometimes useful. Buffers include phosphate, acetate or carbonate buffers or any other acid or base, such as ammonia or alkali metal hydroxides. The concentration range for the initiators and buffers can vary from 0.01% to 5% by weight based on the aqueous polymerization medium.

Aqueous polymerization using the initiators described above will typically provide fluoropolymers with polar end groups; (see, e.g., Logothetis, Prog. Polym. Sci., Vol. 14, pp. 257-258 (1989)). If desired, such as for improved processing or increased chemical stability, the presence of strong polar end groups such as $SO_3^{(-)}$ and $COO^{(-)}$ in fluoropolymers can be reduced through known post treatments (e.g., decarboxylation, post-fluorination). Chain transfer agents of any kind can significantly reduce the number of ionic or polar end groups. The strong polar end groups can be reduced by these methods to any desired level. In some embodiments, the number of polar functional end groups (e.g., -COF, $-SO_2F$, $-SO_3M$, -COO-alkyl, -COOM, or $-O-SO_3M$, wherein alkyl is $C_1$-$C_3$ alkyl and M is hydrogen or a metal or ammonium cation), is reduced to less than or equal to 500, 400, 300, 200, or 100 per $10^6$ carbon atoms. The number of polar end groups can be determined by known infrared spectroscopy techniques. In some embodiments, it may be useful to select initiators and polymerization conditions to achieve at least 1000 polar functional end groups (e.g., -COF, $-SO_2F$, $-SO_3M$, -COO-alkyl,-COOM, or $-O-SO_3M$, wherein alkyl is $C_1$-$C_3$ alkyl and M is hydrogen or a metal or ammonium cation) per $10^6$ carbon atoms, 400 per $10^6$ carbon atoms, or at least 500 per $10^6$ carbon atoms. When a fluoropolymer has at least 1000, 2000, 3000, 4000, or 5000 polar functional end groups per $10^6$ carbon atoms, the fluoropolymer may have increased interaction with the inorganic filler and/or may have improved interlayer adhesion.

Chain transfer agents and any long-chain branching modifiers described above can be fed into the reactor by batch charge or continuously feeding. Because feed amount of chain transfer agent and/or long-chain branching modifier is relatively small compared to the monomer feeds, continuous feeding of small amounts of chain transfer agent and/or long-chain branching modifier into the reactor can be achieved by blending the long-chain branding modifier or chain transfer agent in one or more monomers.

Adjusting, for example, the concentration and activity of the initiator, the concentration of each of the reactive monomers, the temperature, the concentration of the chain transfer agent, and the solvent using techniques known in the art can control the molecular weight of the fluoropolymer. Molecular weight of a fluoropolymer relates to the melt flow index. Fluoropolymers useful for practicing the present disclose may have melt flow indexes in a range from 0.01 grams per ten minutes to 10,000 grams per ten minutes (20 kg/372 °C), in a range from 0.5 grams per ten minutes to 1,000 grams per ten minutes (5 kg/372 °C), or in a range from 0.01 grams per ten minutes to 10,000 grams per ten minutes (5 kg/297 °C).

To coagulate the obtained fluoropolymer latex, any coagulant which is commonly used for coagulation of a fluoropolymer latex may be used, and it may, for example, be a water soluble salt (e.g., calcium chloride, magnesium chloride, aluminum chloride or aluminum nitrate), an acid (e.g., nitric acid, hydrochloric acid or sulfuric acid), or a water-soluble organic liquid (e.g., alcohol or acetone). The amount of the coagulant to be added may be in range of 0.001 to 20 parts by mass, for example, in a range of 0.01 to 10 parts by mass per 100 parts by mass of the fluoropolymer latex. Alternatively or additionally, the fluoropolymer latex may be frozen for coagulation. The coagulated fluoropolymer can be collected by filtration and washed with water. The washing water may, for example, be ion exchanged water, pure water or ultrapure water. The amount of the washing water may be from 1 to 5 times by mass to the fluoropolymer, whereby the amount of the emulsifier attached to the fluoropolymer can be sufficiently reduced by one washing.

Compositions (in some embodiments, filaments, pellets, or granules) according to the present disclosure and/or useful for practicing the methods and articles disclosed herein include inorganic filler.

In some embodiments, the inorganic filler comprises at least one of a metal, a metal oxide, a metal sulfide, a non-oxide ceramic, an oxide ceramic, carbon, a silicate, titania, zirconia, silica, or a pigment. Examples of suitable metallic inorganic fillers include nickel, platinum, and gold. Examples of suitable metal oxides include titania, zirconia, and zinc oxide (e.g., aluminum doped zinc oxide). Examples of suitable metal sulfides include molybdenum disulfide. Examples of suitable non-oxide ceramics include boron nitride, silicon carbide, silicon nitride, and titanium diboride. Examples of suitable oxide ceramics include aluminum (III) oxide, silicon oxides, and boron oxides. Suitable carbons include graphene, graphite, and carbon black. Examples of suitable silicates include aluminoborosilicate, magnesium aluminum silicate, and wollastonite. Examples of suitable pigments include carbon black, titanium dioxide, and pigment blue 60, 15.1, and 15.4.

A variety of shapes of the inorganic filler are useful in the compositions according to and/or useful for practicing the present disclosure. In some embodiments, the inorganic filler comprises at least one of fibers, particles, tubes, or hollow spheres. A variety of sizes of the inorganic filler may also be useful. In some embodiments, the inorganic filler has at least one dimension up to 100 micrometers. Since the inorganic filler may have different shapes that are not symmetrical, in some embodiments, the largest dimension is up to 100 micrometers. The smallest dimension of the inorganic filler may be up to one nanometer (nm) or at least one nm. In some embodiments, the inorganic filler has at least one dimension (in some embodiments, the largest dimension) up to 50 micrometers, 20 micrometers, or 10 micrometers. In some embodiments, the inorganic filler has at least one dimension in a range from 1 nm to 100 micrometers,

1 nm to 50 micrometers, 1 nm to 20 micrometers, or 1 nm to 10 micrometers. Any of the inorganic materials described above may be useful in any of these embodiments of shapes and sizes. For example, useful inorganic fillers include glass fiber, carbon fiber, nanotitania, and nanosilica. Fibers include nanowires (e.g., metallic nanowires, silica nanowires, and titanium nanowires) having a diameter up to about 100 nanometers (nm), 10 nm, or 1 nm. Tubes include nanotubes such as carbon-based nanotubes (e.g., graphite nanotubes) having a diameter up to about 100 nm, up to about 10 nm, or up to about 1 nm.

In some embodiments, the inorganic filler useful in the compositions according to and/or useful for practicing the present disclosure includes a microwave-absorbing material. In these embodiments, the three-dimensional article made by the method according to the present disclosure may be subjected to microwave heating to improve adhesion between at least the second layer and the first layer of the three-dimensional article. The microwave-absorbing material can comprise at least one of carbon nanotubes, carbon black, buckyballs, graphene, superparamagnetic nanoparticles, magnetic nanoparticles, metallic nanowires, semiconducting nanowires (e.g., silicon, gallium nitride, and indium phosphide nanowires), and quantum dots. The three-dimensional article can be irradiated with microwaves during or after it is extruded. In these embodiments, the melt extrusion additive manufacturing device useful for practicing the present disclosure further includes a microwave source operable for irradiating the three-dimensional article or one or more layers thereof after extrusion through the extruder as described in U.S. Pat. Appl. No. 2016/0324491 (Sweeney et al.).

In some embodiments, the inorganic filler has a length-to-width aspect ratio of less than 10,000 to 1, 2000 to 1, 1000 to 1, 500 to 1, 100 to 1, 50 to 1, 25 to 1, 10 to 1, 5 to 1, or 2 to 1. Fibers, wires, and other fillers having high aspect ratios may line up in the flow direction during bead extrusion, which can exacerbate the differential shrinkage problem described above. In these embodiments, length-to-width aspect ratios of less than 10:1, 5:1, or 2:1 may be useful. In some embodiments, the composition is free of reinforcing fibers or contains up to 5, 4, 3, 2, or 1 percent by weight reinforcing fibers, based on the total weight of the composition. In some embodiments, the composition is free of glass fibers or contains up to 5, 4, 3, 2, or 1 percent by weight glass fibers, based on the total weight of the composition.

In some embodiments, the inorganic filler comprises carbon. The carbon filler can be, for example, carbon fibers, carbon nanotubes, platelet nanofibers, graphene nanoribbons, or a mixture thereof. In the case of carbon fibers, these can be any of the high-strength carbon fiber compositions known in the art. Some examples of carbon fiber compositions include those produced by the pyrolysis of polyacrylonitrile (PAN), viscose, rayon, lignin, pitch, or polyolefin. The carbon nanofibers may also be vapor grown carbon nanofibers. In some embodiments, the carbon fiber is in the form of a single carbon strand; however, in more typical embodiments, the carbon fiber is in the form of a tow that contains a multiplicity of carbon strands in a bundle. The carbon fibers can be micron-sized carbon fibers, generally having inner or outer diameters of 1-20 microns or sub-range therein, or carbon nanofibers, generally having inner or outer diameters of 10-1000 nm or sub-range therein. In the case of carbon nanotubes, these may be any of the single-walled or multi-walled carbon nanotubes known in the art, any of which may or may not be heteroatom-doped, such as with nitrogen, boron, oxygen, sulfur, or phosphorus. In other embodiments, the carbon fibers may be diamond nanothreads, as described, for example, in T. C. Fitzgibbons, et al., "Benzene-derived carbon nanothreads", Nature Materials, 14, 43-47 (2015). In the case of platelet carbon nanofibers, these can have an approximately rectangular platelet morphology with 1-100 micron length, as described, for example, in R. Zheng, et al., "Preparation, characterization and growth mechanism of platelet carbon nanofibers", Carbon, vol. 44, no. 4, pp. 742-746 (April 2006). In the case of graphene nanoribbons, these refer to free standing layers of graphene or graphene oxide with ultra-thin widths of generally less than 10, 5, 2, or 1 nm, as described, for example, in P. Han, et al., ACS Nano, 8(9), pp. 9181-9187, 2014 and Z. J. Qi, et al., Nano Lett., 14(8), pp. 4238-4244 (2014). The carbon filler, particularly the carbon fiber, typically possesses a high tensile strength, such as at least 500, 1000, 2000, 3000, 5000, or 10,000 MPa. In some embodiments, the carbon filler, particularly the carbon fiber, possesses a degree of stiffness of the order of steel or higher (e.g., 100-1000 GPa) and/or an elastic modulus of at least 50 Mpsi or 100 Mpsi.

In some embodiments, the carbon filler is made exclusively of carbon, while in other embodiments, the carbon filler can include an amount of one or a combination of non-carbon non-hydrogen (i.e., hetero-dopant) elements, such as nitrogen, oxygen, sulfur, boron, silicon, phosphorus, or a metal, such as an alkali metal (e.g., lithium), alkaline earth metal, transition metal, main group metal (e.g., Al, Ga, or In), or rare earth metal. Some examples of binary carbon compositions include silicon carbide (SiC) and tungsten carbide (WC). The amount of hetero element can be a minor amount (e.g., up to 0.1, 0.5, 1, 2, or 5 wt % or mol %) or a more substantial amount (e.g., about, at least, or up to 10, 15, 20, 25, 30, 40, or 50 wt % or mol %).

In some embodiments, the inorganic filler comprises a metal oxide. Metal oxide nanowires, nanotubes, nanofibers, or nanorods can be, for example, those having or including a main group metal oxide composition, wherein the main group metal is generally selected from Groups 13 and 14 of the Periodic Table. Some examples of Group 13 oxides include aluminum oxide, gallium oxide, indium oxide, and combinations thereof. Some examples of Group 14 oxides include silicon oxide (e.g., glass), germanium oxide, tin oxide, and combinations thereof. The main group metal oxide may also include a combination of Group 13 and Group 14 metals, as in indium tin oxide. In other embodiments, the metal oxide filler has or includes a transition metal oxide composition, wherein the transition metal is generally

selected from Groups 3-12 of the Periodic Table. Some examples of transition metal oxides include scandium oxide, yttrium oxide, titanium oxide, zirconium oxide, hafnium oxide, vanadium oxide, niobium oxide, tantalum oxide, chromium oxide, molybdenum oxide, tungsten oxide, manganese oxide, iron oxide, ruthenium oxide, cobalt oxide, rhodium oxide, iridium oxide, nickel oxide, palladium oxide, copper oxide, zinc oxide, and combinations thereof. The metal oxide filler may also include a combination of main group and transition metals. The metal oxide filler may also include one or more alkali or alkaline earth metals in addition to a main group or transition metal, as in the case of some perovskite nanowires, such as $CaTiO_3$, $BaTiO_3$, $SrTiO_3$, and $LiNbO_3$ nanowires, and as further described in X. Zhu, et al., J. Nanosci. Nanotechnol., 10(7), pp. 4109-4123, July 2010, and R. Grange, et al., Appl. Phys. Lett., 95, 143105 (2009). The metal oxide filler may also have a spinel composition, as in $Zn_2TiO_4$ spinet nanowires, as described in Y. Yang et al., Advanced Materials, vol. 19, no. 14, pp. 1839-1844, July 2007. In some embodiments, the metal oxide filler is constructed solely of metal oxide, whereas in other embodiments, the metal oxide filler is constructed of a coating of a metal oxide on a non-metal oxide, e.g., silica-coated or germanium oxide-coated carbon nanotubes, as described in M. Pumera, et al., Chem Asian J., 4(5), pp. 662-667, May 2009, and M. Pumera, et al., Nanotechnology, 20(42), 425606, 2009, respectively. The metal oxide layer may alternatively be disposed on the surface of a metallic filler.

In some embodiments, the inorganic filler is a metal compound including, for example, metal salts, metal oxide, or combinations thereof. Further suitable examples of metal compounds include oxides and metal salts of lithium and/or a transition metal (including but not limited to cobalt, manganese, aluminum, titanium, or nickel, and iron phosphates, manganese phosphate). Double, and triple salts of lithium are also useful. Examples of salts include but are not limited to sulfides, hydroxides, phosphates and combinations thereof. Examples include lithium-metal oxides such as lithium-cobalt oxide, lithium manganese phosphate, lithium-nickel oxide, and lithium-manganese oxide. In some embodiments, the inorganic filler comprises at least one of $LiCoO_2$, $LiNixCo_{1-x}O_2$, $LiMn_2O_2$, $LiNiO_2$, $LiFePO_4$, $LiNi_xCo_yMn_zO_m$, or $LiNi_x$-$Mn_yAl_zO_m$ where x+y+z=1 and m is an integer representing the number of oxygen atom in the oxide to provide an electron-balanced molecule.

In some embodiments, the inorganic filler is metallic. The metal filler (e.g., metal nanowires, nanotubes, nanofibers, or nanorods) can be, for example, those having or including a main group metal composition, such as a silicon, germanium, or aluminum composition. The metal filaments can also have a composition having or including one or more transition metals, such as nickel, cobalt, copper, gold, palladium, or platinum nanowires. The metal filaments may also be doped with one or more non-metal dopant species, such as nitrogen, phosphorus, arsenic, or silicon to result in a metal nitride, metal phosphide, metal arsenide, or metal silicide composition. Many of these doped metal compositions are known to have semiconductive properties. For example, the metal filler may have a gallium nitride composition, as described, for example, in J. Goldberger, et al., Nature, vol. 422, pp. 599-602, April 2003. Semiconducting fillers may alternatively have an indium phosphide, gallium arsenide, gallium phosphide, silicon nitride, or boron nitride composition.

In some embodiments, compositions (in some embodiments, filaments, pellets, or granules) according to the present disclosure and/or useful for practicing the methods and articles disclosed herein include hollow ceramic microspheres. The hollow ceramic microspheres useful for practicing the present disclosure generally are those that are able to survive the extrusion process (e.g., without being crushed) and therefore are typically found in the three-dimensional article. A lower density in the three-dimensional article can provide evidence for the hollow ceramic microspheres surviving the process and being found in the three-dimensional article. Further evidence for the incorporation of hollow ceramic microspheres in the three-dimensional article can be obtained by cutting through the three-dimensional article and observing the cut surface with a microscope.

In some embodiments, the hollow ceramic microspheres useful for practicing the present disclosure are hollow glass microspheres. Hollow glass microspheres useful in the compositions and methods according to the present disclosure can be made by techniques known in the art (see, e.g., U. S. Pat. Nos. 2,978,340 (Veatch et al.); 3,030,215 (Veatch et al.); 3,129,086 (Veatch et al.); and 3,230,064 (Veatch et al.); 3,365,315 (Beck et al.); 4,391,646 (Howell); and 4,767,726 (Marshall); and U. S. Pat. App. Pub. No. 2006/0122049 (Marshall et. al). Techniques for preparing hollow glass microspheres typically include heating milled frit, commonly referred to as "feed", which contains a blowing agent (e.g., sulfur or a compound of oxygen and sulfur). Frit can be made by heating mineral components of glass at high temperatures until molten glass is formed.

Although the frit and/or the feed may have any composition that is capable of forming a glass, typically, on a total weight basis, the frit comprises from 50 to 90 percent of $SiO_2$, from 2 to 20 percent of alkali metal oxide, from 1 to 30 percent of $B_2O_3$, from 0.005-0.5 percent of sulfur (for example, as elemental sulfur, sulfate or sulfite), from 0 to 25 percent divalent metal oxides (for example, CaO, MgO, BaO, SrO, ZnO, or PbO), from 0 to 10 percent of tetravalent metal oxides other than $SiO_2$ (for example, $TiO_2$, $MnO_2$, or $ZrO_2$), from 0 to 20 percent of trivalent metal oxides (for example, $Al_2O_3$, $Fe_2O_3$, or $Sb_2O_3$), from 0 to 10 percent of oxides of pentavalent atoms (for example, $P_2O_5$ or $V_2O_5$), and from 0 to 5 percent fluorine (as fluoride) which may act as a fluxing agent to facilitate melting of the glass composition. Additional ingredients are useful in frit compositions and can be included in the frit, for example, to contribute particular properties or characteristics (for example, hardness or color) to the resultant hollow glass microspheres.

In some embodiments, the hollow glass microspheres useful in the compositions and methods according to

the present disclosure have a glass composition comprising more alkaline earth metal oxide than alkali metal oxide. In some of these embodiments, the weight ratio of alkaline earth metal oxide to alkali metal oxide is in a range from 1.2:1 to 3:1. In some embodiments, the hollow glass microspheres have a glass composition comprising $B_2O_3$ in a range from 2 percent to 6 percent based on the total weight of the glass bubbles. In some embodiments, the hollow glass microspheres have a glass composition comprising up to 5 percent by weight $Al_2O_3$, based on the total weight of the hollow glass microspheres. In some embodiments, the glass composition is essentially free of $Al_2O_3$. "Essentially free of $Al_2O_3$" may mean up to 5, 4, 3, 2, 1, 0.75, 0.5, 0.25, or 0.1 percent by weight $Al_2O_3$. Glass compositions that are "essentially free of $Al_2O_3$" also include glass compositions having no $Al_2O_3$. Hollow glass microspheres useful for practicing the present disclosure may have, in some embodiments, a chemical composition wherein at least 90%, 94%, or even at least 97% of the glass comprises at least 67% $SiO_2$, (e.g., a range of 70% to 80% $SiO_2$), a range of 8% to 15% of an alkaline earth metal oxide (e.g., CaO), a range of 3% to 8% of an alkali metal oxide (e.g., $Na_2O$), a range of 2% to 6% $B_2O_3$, and a range of 0.125% to 1.5% $SO_3$. In some embodiments, the glass comprises in a range from 30% to 40% Si, 3% to 8% Na, 5% to 11% Ca, 0.5% to 2% B, and 40% to 55% O, based on the total of the glass composition.

Hollow glass microspheres useful for practicing the present disclosure can be obtained commercially and include those marketed by 3M Company, St. Paul, MN, under the trade designation "3M GLASS BUBBLES" (e.g., grades K37, XLD-3000, S38, S38HS, S38XHS, K46, A16/500, A20/1000, D32/4500, H50/10000, S60, S60HS, iM30K, iM16K, S38HS, S38XHS, K42HS, K46, and H50/10000). Other suitable hollow glass microspheres can be obtained, for example, from Potters Industries, Valley Forge, PA, (an affiliate of PQ Corporation) under the trade designations "SPHERICEL HOLLOW GLASS SPHERES" (e.g., grades 110P8 and 60P18) and "Q-CEL HOLLOW SPHERES" (e.g., grades 30, 6014, 6019, 6028, 6036, 6042, 6048, 5019, 5023, and 5028), from Silbrico Corp., Hodgkins, IL under the trade designation "SIL-CELL" (e.g., grades SIL 35/34, SIL-32, SIL-42, and SIL-43), and from Sinosteel Maanshan Inst. of Mining Research Co., Maanshan, China, under the trade designation "Y8000".

In some embodiments, the hollow microspheres useful for practicing the present disclosure are hollow ceramic microspheres other than the glass microspheres described above. In some embodiments, the hollow ceramic microspheres are aluminosilicate microspheres extracted from pulverized fuel ash collected from coal-fired power stations (i.e., cenospheres). Useful cenospheres include those marketed by Sphere One, Inc., Chattanooga, Tenn., under the trade designation "EXTENDOSPHERES HOLLOW SPHERES" (e.g., grades SG, MG, CG, TG, HA, SLG, SL-150, 300/600, 350 and FM-1); and those marketed by SphereServices, Inc., Oak Ridge, Tenn., under the trade designations "RECYCLOSPHERES", "SG500", "Standard Grade 300", "BIONIC BUBBLE XL-150", and "BIONIC BUBBLE W-300". Cenospheres typically have true average densities in a range from 0.25 grams per cubic centimeter (g/cc) to 0.8 g/cc, determined according to the method described below.

In some embodiments, the hollow ceramic microspheres are perlite microspheres. Perlite is an amorphous volcanic glass that greatly expands and forms microspheres when it is sufficiently heated. The bulk density of perlite microspheres is typically in a range, for example, from 0.03 to 0.15 $g/cm^3$. A typical composition of perlite microspheres is 70% to 75% $SiO_2$, 12% to 15% $Al_2O_3$, 0.5% to 1.5% CaO, 3% to 4% $Na_2O$, 3% to 5% $K_2O$, 0.5% to 2% $Fe_2O_3$, and 0.2% to 0.7% MgO. Useful perlite microspheres include those available, for example, from Silbrico Corporation, Hodgkins, IL.

In some embodiments, the hollow ceramic microspheres are hollow aluminum oxide spheres. Hollow aluminum oxide spheres can be made by fusing high purity alumina. Compressed air is introduced to the melt to form bubbles. Suitable hollow aluminum oxide spheres of various sizes are commercially available, for example, from Imerys Fused Minerals, Villach, Austria, under the trade designation "ALODUR KKW".

The "average true density" of hollow ceramic microspheres is the quotient obtained by dividing the mass of a sample of hollow ceramic microspheres by the true volume of that mass of hollow ceramic microspheres as measured by a gas pycnometer. The "true volume" is the aggregate total volume of the hollow ceramic microspheres, not the bulk volume. The average true density of the hollow ceramic microspheres useful for practicing the present disclosure is generally at least 0.20 grams per cubic centimeter (g/cc), 0.25 g/cc, or 0.30 g/cc. In some embodiments, the hollow ceramic microspheres useful for practicing the present disclosure have an average true density of up to about 0.65 g/cc. "About 0.65 g/cc" means 0.65 g/cc $\pm$ five percent. In some of these embodiments, the average true density of the hollow ceramic microspheres disclosed herein may be in a range from 0.2 g/cc to 0.65 g/cc, 0.2 g/cc to 0.5 g/cc, 0.3 g/cc to 0.65 g/cc, or 0.3 g/cc to 0.48 g/cc. Hollow ceramic microspheres having any of these densities can be useful for lowering the density of three-dimensional articles according to the present disclosure and/or made according to the methods disclosed herein.

In some embodiments of the compositions (including filaments, pellets, or granules) according to the present disclosure, the hollow ceramic microspheres in the composition are those described in U.S. Pat. No. 9,006,302 (Amos et al.).

For the purposes of this disclosure, average true density is measured using a pycnometer according to ASTM D2840- 69, "Average True Particle Density of Hollow Microspheres". The pycnometer may be obtained, for example, under the trade designation "ACCUPYC 1330 PYCNOMETER" from Micromeritics, Norcross, Georgia, or under the

trade designations "PENTAPYCNOMETER" or "ULTRAPYCNOMETER 1000" from Formanex, Inc., San Diego, CA. Average true density can typically be measured with an accuracy of 0.001 g/cc. Accordingly, each of the density values provided above can be ± five percent.

A variety of sizes of hollow ceramic microspheres may be useful in the methods, articles, compositions disclosed herein. As used herein, the term size is considered to be equivalent with the diameter and height of the hollow ceramic microspheres. In some embodiments, the hollow ceramic microspheres can have a median size by volume in a range from 14 to 70 micrometers (in some embodiments from 15 to 65 micrometers, 15 to 60 micrometers, or 20 to 50 micrometers). The median size is also called the D50 size, where 50 percent by volume of the hollow ceramic microspheres in the distribution are smaller than the indicated size. For the purposes of the present disclosure, the median size by volume is determined by laser light diffraction by dispersing the hollow ceramic microspheres in deaerated, deionized water. Laser light diffraction particle size analyzers are available, for example, under the trade designation "SATURN DIGISIZER" from Micromeritics. The size distribution of the hollow ceramic microspheres useful for practicing the present disclosure may be Gaussian, normal, or non-normal. Non-normal distributions may be unimodal or multi-modal (e.g., bimodal).

The hollow ceramic microspheres useful for practicing the present disclosure generally are those that are able to survive the extrusion process (e.g., without being crushed) in the method according to the present disclosure. A useful isostatic pressure at which ten percent by volume of hollow ceramic microspheres collapses is typically at least about 17 MPa. In some embodiments, an isostatic pressure at which ten percent by volume of the hollow ceramic microspheres collapses can be at least 17, 20, or 38 MPa, depending on the requirements of the final three-dimensional article. In some embodiments, an isostatic pressure at which ten percent, or twenty percent, by volume of the hollow ceramic microspheres collapses is up to 250 (in some embodiments, up to 210, 190, or 170) MPa. For the purposes of the present disclosure, the collapse strength of the hollow ceramic microspheres is measured on a dispersion of the hollow ceramic microspheres in glycerol using ASTM D3102 -72 "Hydrostatic Collapse Strength of Hollow Glass Microspheres"; with the exception that the sample size (in grams) is equal to 10 times the density of the ceramic bubbles. Collapse strength can typically be measured with an accuracy of ± about five percent. Accordingly, each of the collapse strength values provided above can be ± five percent. It should be understood by a person skilled in the art that not all hollow ceramic microspheres with the same density have the same collapse strength and that an increase in density does not always correlate with an increase in collapse strength.

Combinations of any of the above-mentioned inorganic fillers may be useful for practicing the present disclosure. In some embodiments, the inorganic filler comprises at least one of hollow ceramic microspheres, carbon, or a metal oxide.

The incorporation of hollow ceramic microspheres into three-dimensional articles made by the method of the present disclosure provides an advantageous weight reduction. Thus, compositions and methods disclosed herein are useful, for example, for lowering the specific gravity of a three-dimensional article made by melt extrusion additive manufacturing in comparison to a three-dimensional article comprising the fluoropolymer but no hollow ceramic microspheres. Specific gravity refers to the density of the substance making up the three-dimensional object, and not the bulk of the three-dimensional object, which can include void spaces.

In some embodiments, inorganic filler useful for practicing the present disclosure is surface treated. In some embodiments, the inorganic filler is surface treated with a coupling agent such as a zirconate, silane, or titanate. Typical titanate and zirconate coupling agents are known to those skilled in the art and a detailed overview of the uses and selection criteria for these materials can be found in Monte, S.J., Kenrich Petrochemicals, Inc., "Ken-React® Reference Manual - Titanate, Zirconate and Aluminate Coupling Agents", Third Revised Edition, March, 1995. In some of these embodiments, the inorganic filler has a siliceous surface. Suitable silanes are coupled to ceramic (e.g., glass) surfaces through condensation reactions to form siloxane linkages with the siliceous surfaces. The treatment renders the siliceous filler more wet-able or promotes the adhesion of materials to the surface of the filler. This provides a mechanism to bring about covalent, ionic or dipole bonding between inorganic fillers and organic matrices. Silane coupling agents may be chosen based on the particular functionality desired. Suitable silane coupling strategies are outlined in Silane Coupling Agents: Connecting Across Boundaries, by Barry Arkles, pg 165 - 189, Gelest Catalog 3000-A Silanes and Silicones: Gelest Inc. Morrisville, PA. In some embodiments, useful silane coupling agents have amino functional groups (e.g., N-2-(aminoethyl)-3-aminopropyltrimethoxysilane and (3-aminopropyl)trimethoxysilane). In some embodiments, it may be useful to use a coupling agent that contains a polymerizable moiety. Examples of polymerizable moieties are materials that contain olefinic functionality such as styrenic, vinyl (e.g., vinyltriethoxysilane, vinyltri(2-methoxyethoxy) silane), acrylic and methacrylic moieties (e.g., 3-metacrylroxypropyltrimethoxysilane). Other examples of useful silanes that may participate in crosslinking include 3-mercaptopropyltrimethoxysilane, bis(triethoxysilipropyl)tetrasulfane (e.g., available under the trade designation "SI-69" from Evonik Industries, Wesseling, Germany), and thiocyanatopropyltriethoxysilane. If used, coupling agents are commonly included in an amount of about 1 to 3% by weight, based on the total weight of the inorganic filler. In some embodiments, the inorganic filler useful for practicing the present disclosure is hollow ceramic microspheres that are surface treated, for example, with any of the zirconates, silanes, or titanates described above. In some embodiments, the hollow ceramic microspheres useful for practicing the present disclosure are not surface treated,

for example, with any of the zirconates, silanes, or titanates described above.

In some embodiments, hollow ceramic microspheres useful for practicing the present disclosure are provided with a polymeric coating as described in Int. Pat. Appl, Pub. Nos. WO2013/148307 (Barrios et al.), WO2014/100593 (Amos et al.), and WO2014/100614 (Amos et al.). The polymeric coating can include a cationic polymer, a nonionic polymer, a conductive polymer, a fluoropolymer (e.g., an amorphous fluoropolymer), an anionic polymer, or a hydrocarbon polymer. In some embodiments, the polymeric coating is a polyolefin (e.g., polyethylene, polypropylene, polybutylene, polystyrene, polyisoprene, paraffin waxes, EPDM copolymer, or polybutadiene) or an acrylic homopolymer or copolymer (e.g., polymethyl acrylate, polyethyl methacrylate, polyethyl acrylate, polyethyl methacrylate, polybutyl acrylate, or butyl methacrylate). In some embodiments, the polymeric coating is selected to be compatible with the fluoropolymer in the filament or composition disclosed herein. Polymeric coatings on hollow ceramic microspheres may be made, for example, by a process that includes combining a dispersion with a plurality of hollow ceramic microspheres such that a polymeric coating is disposed on at least a portion of the surfaces of the hollow ceramic microspheres. The dispersion can include a continuous aqueous phase and a dispersed phase. The continuous aqueous phase includes water and optionally one or more water-soluble organic solvents (e.g., glyme, ethylene glycol, propylene glycol, methanol, ethanol, N-methylpyrrolidone, and/or propanol). The dispersed phase includes any one or more of the polymers as described above. The polymer dispersion can be stabilized with a cationic emulsifier, for example. Cationically-stabilized polyolefin emulsions are readily available from commercial sources, for example, under the trade designation "MICHEM EMULSION' (e.g., grades 09730, 11226, 09625, 28640, 70350) from Michelman, Inc., Cincinnati, Ohio.

In some embodiments, hollow ceramic microspheres useful for practicing the present disclosure are provided with an organic acid or mineral acid coating as described in U.S. Pat. No. 3,061,495 (Alford). In some embodiments, the hollow ceramic microspheres are treated with an aqueous solution of sulfuric acid, hydrochloric acid, or nitric acid at a concentration and for a time sufficient to reduce the alkali metal concentration of hollow ceramic microspheres. This can be useful, for example, when the composition including a fluoropolymer and hollow ceramic microspheres includes base-sensitive polymers such as PVDF, THV, and amorphous fluoropolymers comprising HFP and VDF.

The inorganic filler is typically present in the composition including a fluoropolymer and inorganic filler (in some embodiments, the filament) disclosed herein in any of the above embodiments at a level of at least 0.01 percent by weight, in some embodiments, at least 0.5 percent by weight, based on the total weight of the composition. In some embodiments, the inorganic filler is present in the composition at least at 1, 2, 3, 4, 5, 6, 7, 8, 9, or 10 percent by weight based on the total weight of the composition. In some embodiments, the inorganic filler is present in the composition at a level of up to 50, 40, 30, 20, 15, or 10 percent by weight, based on the total weight of the composition. In some embodiments, the inorganic filler is present in the composition in a range from 0.5 to 20, 1 to 20, 5 to 20, or 5 to 15 percent by weight, based on the total weight of the composition. For microwave-absorbing inorganic fillers, the inorganic filler can be present in the composition in less than percent by weight and still be effective for absorbing microwave radiation.

Compositions including the fluoropolymer and inorganic filler disclosed herein in any of the above embodiments may have at least 50 percent by weight (in some embodiments, at least 80 percent by weight) of the fluoropolymer, based on the total weight of the composition. In some embodiments, the composition includes greater than 80 percent by weight or at least 81, 82, 83, 84, 85, 89, 90, or 91 percent by weight of the fluoropolymer, based on the total weight of the composition.

In addition to improving improved adhesion between layers in a three-dimensional article made according to the method of the present disclosure, inorganic filler can be useful, for example, for enhancing the tensile, flexural, and/or impact strength of the composition. That is, in some embodiments, the inorganic filler can be considered a reinforcing filler. Other useful reinforcing fillers include wood flour and other natural fillers and fibers (e.g., walnut shells, hemp, cellulosic fibers, and corn silks). However, as described above, some fibers and other fillers having high aspect ratios may line up in the flow direction during bead extrusion, which can exacerbate the differential shrinkage problem described above. Accordingly, in some embodiments, the composition is free of cellulosic fibers (in some embodiments, wood fibers) or contains up to 5, 4, 3, 2, or 1 percent by weight cellulosic fibers (in some embodiments, wood fibers), based on the total weight of the composition.

As described above, in some embodiments of the composition according to and/or useful in the method according to the present disclosure, the inorganic filler includes a microwave-absorbing material. The three-dimensional article made by the method according to the present disclosure be subjected to microwave heating to improve adhesion between at least the second layer and the first layer of the three-dimensional article. While the microwave-absorbing material can be included as at least a portion of the inorganic filler within the bulk of the fluoropolymer, in some embodiments, it can be included on the surface of the extruded first and second layer portions, on the surface of another inorganic filler (e.g., hollow ceramic microspheres), or a combination of these. Coating the surfaces of the inorganic fillers and/or first and second layer portions of the three-dimensional article can be carried out, for example, by spraying a dispersion of the microwave-absorbing material onto the desired surface. Dip coating the inorganic fillers and/or input filaments, pellets, or granules for the melt extrusion manufacturing process in a bath of the dispersion may also be useful. Filaments coated

with a microwave absorbing material can be made by simultaneous co-extrusion of a polymer and microwave-absorbing material sheath and pure fluoropolymer core coaxial filament using the method described, for example, in U.S. Pat. No. 5,219,508 (Collier et al.). The three-dimensional article can be irradiated with microwaves during or after it is extruded. In these embodiments, the melt extrusion additive manufacturing device useful for practicing the present disclosure further includes a microwave source operable for irradiating the three-dimensional article or one or more layers thereof after extrusion through the extruder as described in U.S. Pat. Appl. No. 2016/0324491 (Sweeney et al.). The microwave-absorbing material useful for any of these embodiments can comprise at least one of carbon nanotubes, carbon black, buckyballs, graphene, superparamagnetic nanoparticles, magnetic nanoparticles, metallic nanowires, semiconducting nanowires, quantum dots, polyaniline (PANI), and poly3,4-ethylenedioxythiophene polystyrenesulfonate.

Other additives may be incorporated into the composition disclosed herein in any of the embodiments described above. Examples of other additives that may be useful, depending on the intended use of the three-dimensional article, include preservatives, mixing agents, colorants (e.g., pigments or dyes), dispersants, floating or anti-setting agents, flow or processing agents, wetting agents, anti-ozonant, odor scavengers, acid neutralizer, antistatic agent, and adhesion promoters (e.g., a coupling agent described above).

The method according to the present disclosure includes heating the composition to provide the composition in molten form. Heating may be carried out, for example, in the extrusion head. It should be understood that the fluoropolymer other components of the composition described above may melt when the composition is heated. However, not every component of the composition needs to melt or be a liquid for it to be considered to be in molten form. For example, the inorganic filler does not melt.

In some embodiments, the fluoropolymer in compositions and methods disclosed herein is crosslinkable, forming a thermoset in the three-dimensional article. A fluoropolymer described above including at least one cure site monomer is crosslinkable, and the three-dimensional object formed from such a fluoropolymer can be a fluoroelastomer. A commonly used cure system is based on a peroxide cure reaction using appropriate curing compounds having or creating peroxides. It is generally believed that the bromine or iodine atoms are abstracted in the free radical peroxide cure reaction, thereby causing the fluoropolymer molecules to cross-link and to form a network. Suitable organic peroxides are those which generate free radicals at curing temperatures. A dialkyl peroxide or a bis(dialkyl peroxide) which decomposes at a temperature above the extrusion temperature may be useful. A di-tertiarybutyl peroxide having a tertiary carbon atom attached to the peroxy oxygen, for example, may be useful. Among the peroxides of this type are 2,5-dimethyl-2,5-di(tertiarybutylperoxy)hexyne-3 and 2,5-dimethyl-2,5-di(tertiarybutylperoxy)hexane. Other peroxides useful for making fluoroelastomers can be selected from compounds such as dicumyl peroxide, dibenzoyl peroxide, tertiarybutyl perbenzoate, alpha,alpha'-bis(t-butylperoxy-diisopropylbenzene), and di[1,3-dimethyl-3-(t-butylperoxy)-butyl] carbonate. A tertiary butyl peroxide having a tertiary carbon atom attached to a peroxy oxygen may be a useful class of peroxides. Further examples of peroxides include 2,5-dimethyl-2,5-di(t-butylperoxy)hexane; dicumyl peroxide; di(2-t-butylperoxyisopropyl)benzene; dialkyl peroxide; bis (dialkyl peroxide); 2,5-dimethyl-2,5-di(tertiarybutylperoxy)3-hexyne; dibenzoyl peroxide; 2,4-dichlorobenzoyl peroxide; tertiarybutyl perbenzoate; di(t-butylperoxy-isopropyl)benzene; t-butyl peroxy isopropylcarbonate, t-butyl peroxy 2-ethylhexyl carbonate, t-amyl peroxy 2-ethylhexyl carbonate, t-hexylperoxy isopropyl carbonate, di[1,3-dimethyl-3-(t-butylperoxy)butyl] carbonate, carbonoperoxoic acid, O,O'-1,3-propanediyl OO,OO'-bis(1,1-dimethylethyl) ester, and combinations thereof. The amount of peroxide curing agent used generally will be at least 0.1, 0.2, 0.4, 0.6, 0.8, 1, 1.2, or even 1.5; at most 2, 2.25, 2.5, 2.75, 3, 3.5, 4, 4.5, 5, or even 5.5 parts by weight per 100 parts of the fluoropolymer may be used.

The curing agents may be present on carriers, for example, silica containing carriers.

A peroxide cure system may also include one or more coagent. Typically, the coagent includes a polyunsaturated compound which is capable of cooperating with the peroxide to provide a useful cure. These coagents can be added in an amount between 0.1 and 10 parts per hundred parts fluoropolymer, in some embodiments between 2 and 5 parts per hundred parts fluoropolymer. Examples of useful coagents include tri(methyl)allyl isocyanurate (TMAIC), triallyl isocyanurate (TAIC), tri(methyl)allyl cyanurate, poly-triallyl isocyanurate (poly-TAIC), triallyl cyanurate (TAC), xylylene-bis(diallyl isocyanurate) (XBD), N,N'-m-phenylene bismaleimide, diallyl phthalate, tris(diallylamine)-s-triazine, triallyl phosphite, 1,2-polybutadiene, ethyleneglycol diacrylate, diethyleneglycol diacrylate, and combinations thereof. Another useful coagent may be represented by the formula CH2=CH-Rf1-CH=CH2 wherein Rf1 may be a perfluoroalkylene having from 1 to 8 carbon atoms. Such coagents can provide enhanced mechanical strength to the final cured elastomer.

Curing of composition including a fluoropolymer and inorganic filler, wherein the fluoropolymer has nitrogen-containing cure sites, can also be modified by using yet other types of curatives to achieve a dual cure system. Examples of such curatives for fluoropolymers with nitrile cure sites include fluoroalkoxy organophosphohium, organoammonium, or organosulfonium compounds (e.g., Int. Pat. Appl. Pub. No. WO 2010/151610 (Grootaert et al.), bis-aminophenols (e.g., U.S. Pat. Nos. 5,767,204 (Iwa et al.) and 5,700,879 (Yamamoto et al.)), bis-amidooximes (e.g., U.S. Pat. No. 5,621,145 (Saito et al.)), and ammonium salts (e.g., U.S. Pat. No. 5,565,512 (Saito et al.)). In addition, organometallic compounds of arsenic, antimony, and tin (e.g., allyl-, propargyl-, triphenyl- allenyl-, and tetraphenyltin and triphenyltin hydroxide) as described in U.S. Pat. Nos. 4,281,092 (Breazeale) and 5,554,680 (Ojakaar) and ammonia-generating

compounds may be useful. "Ammonia-generating compounds" include compounds that are solid or liquid at ambient conditions but that generate ammonia under conditions of cure. Examples of such compounds include hexamethylenetetramine (urotropin), dicyandiamide, and metal-containing compounds of the formula $A^{w+}(NH_3)_xY^{w-}$, wherein $A^{w+}$ is a metal cation such as $Cu^{2+}$, $Co^{2+}$, $Co^{3+}$, $Cu^{+}$, and $Ni^{2+}$; w is equal to the valance of the metal cation; $Y^{w-}$ is a counterion (e.g., a halide, sulfate, nitrate, acetate); and x is an integer from 1 to about 7. Further examples include substituted and unsubstituted triazine derivatives such as those of the formula:

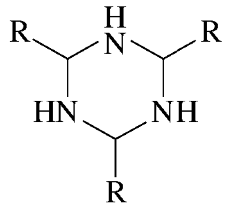

wherein R is a hydrogen atom or a substituted or unsubstituted alkyl, aryl, or arylalkylene group having from 1 to about 20 carbon atoms. Specific useful triazine derivatives include hexahydro-1,3,5-s-triazine and acetaldehyde ammonia trimer.

The curable composition may further contain acid acceptors. Acid acceptors may be added to improve the fluoroelastomers steam and water resistance. Such acid acceptors can be inorganic or blends of inorganic and organic acid acceptors. Examples of inorganic acceptors include magnesium oxide, lead oxide, calcium oxide, calcium hydroxide, dibasic lead phosphate, zinc oxide, barium carbonate, strontium hydroxide, calcium carbonate, hydrotalcite, etc. Organic acceptors include epoxies, sodium stearate, and magnesium oxalate. Particularly suitable acid acceptors include magnesium oxide and zinc oxide. Blends of acid acceptors may be used as well. The amount of acid acceptor will generally depend on the nature of the acid acceptor used. However, some applications like fuel cell sealants or gaskets for the semiconductor industry require low metal content. Accordingly, in some embodiments, the composition is free of such acid acceptors or includes an amount of these acid acceptors such that the composition has less than 1 ppm total metal ion content.

In some embodiments, an acid acceptor is used between 0.5 and 5 parts per 100 parts of the curable composition. In other embodiments, an acid acceptor is not needed and the composition is essentially free an acid acceptor. As used herein, essentially free of an acid acceptor or essentially free of a metal-containing acid acceptor means less than 0.01, 0.005, or even 0.001 parts per 100 parts of the composition according to the present disclosure and includes being free of an acid acceptor.

Curing is typically achieved by heat-treating the curable composition. The heat-treatment is carried out at an effective temperature and effective time to create a cured fluoroelastomer. Optimum conditions can be tested by examining the cured highly fluorinated elastomer for its mechanical and physical properties. Typically, curing is carried out at temperatures greater than 120°C or greater than 150°C. Typical curing conditions include curing at temperatures between 160°C and 210°C or between 160°C and 190°C. Typical curing periods include from 3 to 90 minutes. Curing may be carried out under pressure. For example pressures from 10 to 100 bar may be applied. A post curing cycle may be applied to ensure the curing process is fully completed. Post curing may be carried out at a temperature between 170°C and 250°C for a period of 1 to 24 hours.

In addition to heating to induce crosslinking, after making at least a portion of the three-dimensional article by extruding at least a second layer of the composition in molten form onto at least the portion of the first layer, the three-dimensional article or portion thereof can also be crosslinked by exposure to at least one of ultraviolet, e-beam, or gamma radiation. When ultraviolet light is used for crosslinking, it is useful to include a photoinitiator in the composition. Examples of compounds useful as photoinitiators include benzoin ether, acetophenone, benzoyl oxime, and acyl phosphines. Specific examples of useful photoinitiators include benzoin ethers (e.g., benzoin methyl ether or benzoin butyl ether); acetophenone derivatives (e.g., 2,2-dimethoxy-2-phenylacetophenone or 2,2-diethoxyacetophenone); 1-hydroxycyclohexyl phenyl ketone; and acylphosphine oxide derivatives and acylphosphonate derivatives (e.g., bis(2,4,6-trimethylbenzoyl)phenylphosphine oxide, diphenyl-2,4,6-trimethylbenzoylphosphine oxide, isopropoxyphenyl-2,4,6-trimethylbenzoylphosphine oxide, or dimethyl pivaloylphosphonate). Examples of commercially available photoinitiators that absorb UV light to generate radicals include 1-hydroxycyclohexyl benzophenone (available, for example, under the trade designation "IRGACURE 184" from BASF, Florham Park, NJ), 4-(2-hydroxyethoxy)phenyl-(2-hydroxy-2-propyl) ketone (available, for example, under the trade designation "IRGACURE 2529" from BASF), 2-hydroxy-2-methylpropiophenone (available, for example, under the trade designation "DAROCURE D111" from BASF and bis(2,4,6-trimethylbenzoyl)-phenylposphineoxide (available, for example, under the trade designation "IRGACURE 819" from BASF). The photoinitiator may be included in the composition at any useful level. In some embodiments, the amount of photoinitiator is at least 0.01 wt. %, at least 0.1 wt. %, or at least 0.5 wt. %, based on the total weight of the composition. In some embodiments,

the amount of photoinitiator is up to 0.5 wt. %, up to 1.5 wt. %, or up to 3 wt. %, based on the total weight of the composition. The amount of the photoinitiator may be in a range from 0.01 wt. % to 3 wt. % or from 0.5 wt. % to 1.5 wt. %, based on the total weight of the composition.

Filaments, or strands, according to the present disclosure and/or useful for practicing some embodiments of the method of the present disclosure can generally be made using techniques known in the art for making filaments. Filaments, or strands, can be made by extrusion through a strand die. In some embodiments, filaments, or strands, according to the present disclosure and/or useful for practicing some embodiments of the method of the present disclosure are made by extrusion through a strand die. Inorganic filler can be added to a fluorocomposition in an extruder (e.g., a twin-screw extruder) equipped with a side stuffer, for example, that allows for the inorganic filler addition. The composition comprising a fluoropolymer and inorganic filler can be extruded through a strand die having an appropriate diameter. Optionally, the strand can be cooled upon extrusion using a water bath. The filament can be lengthened using a belt puller. The speed of the belt puller can be adjusted to achieve a desired filament diameter.

An embodiment of a strand die useful for making a filament 50 according to the present disclosure and/or useful for practicing the present disclosure is shown in the sectional view of FIG. 2. Strand die 20 includes a strand die body 21 that is surrounded by a heater band 23. The composition comprising a fluoropolymer and inorganic filler can be extruded through cavity 29 in the strand die body 21. In the illustrated embodiment, the strand die 20 is equipped with a strand die screw-in insert 25. Die swell 27 can occur as the strand 50 exits the strand die body 21. The screw-in insert 25 allows for quickly changing the land length and diameter during extrusion to accommodate different resins, which exhibit, for example, different die swell characteristics, to obtain a strand 50 having a desired diameter and ovality.

The aspect ratio (that is, length to diameter or width) of filaments useful in some embodiments of the method of the present disclosure may be, for example, at least 10:1, 25:1, 50:1, 100:1, 150:1, 200:1, 250:1, 500:1, 1000:1, or more; or in a range from 200:1 to 10,000:1. Filaments having a length of at least about 20 feet (6 meters) can be useful in a method according to the present disclosure. Filaments can have any desired length and can be provided in a coil, for example. Filaments having a length of up to about 100 feet (30.5 meters) can also be useful. Typically, the filaments disclosed herein have a maximum cross-sectional dimension up to 3 (in some embodiments, up to 2.5, 2, 1.75, or 1.5) millimeters (mm). For example, the filament may have a circular cross-section with an average diameter in a range from 1 micrometer to 3 mm, 1.5 to 3 mm, or 1.5 to 2 mm.

The inorganic filler can provide useful mechanical properties to the three-dimensional article, for example, higher rigidity and higher modulus. Typically and unexpectedly, when inorganic filler is present in the composition, adhesion between the first layer and second layer is better than in a comparative three-dimensional article. The comparative three-dimensional article is prepared according to the method of making the three-dimension article except that the composition does not comprise inorganic filler. Also, typically and advantageously, the layers in the three-dimensional article made by the method of the present disclosure are more dimensionally stable than in the comparative three-dimensional article. Also, typically and advantageously, the layers in the three-dimensional article made by the method of the present disclosure can cool faster than in the comparative three-dimensional article because of the presence of the inorganic filler. Faster cooling can reduce the time required to make the three-dimensional article.

As described in the Examples, below, printing cones was used to evaluate a composition of the present disclosure in comparison to a composition that does not include inorganic filler. As cones are printed from the base to the tip, the circumference of the cone decreases, leading to a decrease in the nozzle round-trip time. As a result, as printing proceeds higher up the cone, a volume of extruded polymer has less time to cool down and solidify before a new layer is printed on top. In a comparison between Control Example A and Example 1, the cone printed from Example 1 remains defect-free for longer and higher up the cone, and the defects are less severe, showing the benefit of the added inorganic filler in speeding extrudate solidification. A shorter nozzle-round-trip time can be achieved with the filament of Example 1 than with Control Example A, suggesting more rapid cooling and solidification in Example 1.

The incorporation of inorganic filler into a filament, or strand, for use in fused filament fabrication according to the present disclosure can also provide advantages. Typically and advantageously, a filament that is made from a composition including inorganic filler and a fluoropolymer can be made with better ovality than a filament made from a composition that does not contain inorganic filler. As used herein, ovality refers to the distortion of the cross-section of the filament from a round shape. Ovality can be expressed as a percentage and is calculated by taking twice the difference between the major and minor axes of the filament divided by the sum of the major and minor axes and multiplying by 100 as shown in the equation below:

$$[2(\text{major axis} - \text{minor axis})]/(\text{major axis} + \text{minor axis}) \times 100.$$

Major and minor axes can be measured with a caliper, for example.

In some embodiments, the ovality of the filament for used in fused filament fabrication is up to 10%, 9%, 8%, 7%, 6%, 5%, 4%, 3%, or 2%. Accordingly, the present disclosure provides a filament comprising a fluoropolymer and

inorganic filler having an ovality of up to up to 10%, 9%, 8%, 7%, 6%, 5%, 4%, 3%, or 2%. In some of these embodiments, the aspect ratio (that is, length to diameter or major axis) of the filament is at least 10:1, 25:1, 50:1, 100:1, 150:1, 200:1, 250:1, 500:1, 1000:1, or more; or in a range from 100:1 to 10,000:1. As shown in the Examples, below, filaments having dimensions suitable for evaluation in a 3D printer were prepared by extruding a composition including a fluoropolymer and inorganic filler.

## Some Embodiments of the Disclosure

In a first embodiment, the present disclosure provides a method of making a three-dimensional article, the method comprising:

heating a composition comprising an inorganic filler and a fluoropolymer;
extruding the composition in molten form from an extrusion head to provide at least a portion of a first layer of the three dimensional article; and
extruding at least a second layer of the composition in molten form onto at least the portion of the first layer to make at least a portion of the three dimensional article,
wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

In a second embodiment, the present disclosure provides the method of the first embodiment, further comprising at least partially melting the fluoropolymer in the extrusion head to provide the composition in molten form.
In a third embodiment, the present disclosure provides the method of the second embodiment, wherein the fluoropolymer comprises interpolymerized units from at least one partially fluorinated or perfluorinated ethylenically unsaturated monomer represented by formula $RCF=CR_2$, wherein each R is independently fluoro, chloro, bromo, hydrogen, a fluoroalkyl group having up to 8 carbon atoms and optionally interrupted by one or more oxygen atoms, a fluoroalkoxy group having up to 8 carbon atoms and optionally interrupted by one or more oxygen atoms, alkyl having up to 10 carbon atoms, alkoxy having up to 8 carbon atoms, or aryl having up to 8 carbon atoms.
In a fourth embodiment, the present disclosure provides the method of the any one of the first to third embodiments, wherein the fluoropolymer is an amorphous fluoropolymer having a glass transition temperature of up to 280 °C.
In a fifth embodiment, the present disclosure provides the method of the fourth embodiment, wherein the fluoropolymer is an amorphous fluoropolymer comprising interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, a perfluoroallyl ether, a perfluorinated 1,3-dioxole optionally substituted by perfluoro$C_{1-4}$alkyl or perfluoro$C_{1-4}$alkoxy, poly(perfluoro-4-vinyloxy-1-butene), poly(perfluoro-4-vinyloxy-3-methyl-1-butene), or a perfluoro-2-methylene-1,3-dioxolane that is unsubstituted, substituted by at least one of perfluoro$C_{1-4}$alkyl or perfluoro$C_{1-4}$alkoxy$C_{1-4}$alkyl, or fused to a 5- or 6-membered perfluorinated ring optionally containing one oxygen atom.
In a sixth embodiment, the present disclosure provides the method of the fourth or fifth embodiment, wherein the fluoropolymer is an amorphous fluoropolymer comprising less than 50 percent by weight interpolymerized units of vinylidene fluoride
In a seventh embodiment, the present disclosure provides the method of the fifth or sixth embodiment, wherein the fluoropolymer further comprises a cure site, and wherein composition further comprises a curing agent.
In an eighth embodiment, the present disclosure provides the method of any one of the first to third embodiments, wherein the fluoropolymer is the semi-crystalline fluorothermoplastic.
In a ninth embodiment, the present disclosure provides the method of the eighth embodiment, wherein the semi-crystalline fluorothermoplastic polymer includes at least 25, 30, 35, 40, 45, 50, 55, or 60 percent by weight interpolymerized units of tetrafluoroethylene.
In a tenth embodiment, the present disclosure provides the method of the eighth or ninth embodiment, wherein the semi-crystalline fluorothermoplastic comprises interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, or a perfluoroallyl ether.
In an eleventh embodiment, the present disclosure provides the method of any one of the eighth to tenth embodiments, wherein the semi-crystalline fluorothermoplastic comprises interpolymerized units of tetrafluoroethylene, hexafluoropropylene, and ethylene.
In a twelfth embodiment, the present disclosure provides the method of any one of the eighth to tenth embodiments, wherein the semi-crystalline fluorothermoplastic is perfluorinated.

In a thirteenth embodiment, the present disclosure provides the method of any one of the first to twelfth embodiments, wherein the composition comprises at least 50 percent by weight of the fluoropolymer, based on the total weight of the composition.

In a fourteenth embodiment, the present disclosure provides the method of any one of the first to thirteenth embodiments, wherein the composition comprises greater than 80 percent by weight of the fluoropolymer, based on the total weight of the composition.

In a fifteenth embodiment, the present disclosure provides the method of any one of the first to fourteenth embodiments, wherein the composition comprises at least 85 percent by weight of the fluoropolymer, based on the total weight of the composition.

In a sixteenth embodiment, the present disclosure provides the method of any one of the first to fifteenth embodiments, wherein the composition comprises at least 0.01 percent by weight of the inorganic filler, based on the total weight of the composition.

In a seventeenth embodiment, the present disclosure provides the method of any one of the first to sixteenth embodiments, further comprising providing the composition as a filament comprising the fluoropolymer and the inorganic filler before heating.

In an eighteenth embodiment, the present disclosure provides the method of the seventeenth embodiment, wherein the filament has lower ovality in comparison to a filament comprising the fluoropolymer but not including the inorganic filler.

In a nineteenth embodiment, the present disclosure provides the method of any one of the first to eighteenth embodiments, wherein the inorganic filler comprises at least one of metals, metal oxides, metal sulfides, non-oxide ceramics, oxide ceramics, carbon, silicates, titania, zirconia, silica, or a pigment.

In a twentieth h embodiment, the present disclosure provides the method of any one of the first to nineteenth h embodiments, wherein the inorganic filler comprises at least one of fibers, particles, tubes, or hollow spheres.

In a twenty-first embodiment, the present disclosure provides the method of any one of the first to twentieth embodiments, wherein the inorganic filler has a length-to-width aspect ratio of less than 10,000 to 1, 2000:1, 1000:1, 500:1, 100:1, 50:1, 25:1, 10:1, 5:1, or 2:1.

In a twenty-second embodiment, the present disclosure provides the method of any one of the first to nineteenth embodiments, wherein the composition is substantially free of glass fibers.

In a twenty-third embodiment, the present disclosure provides the method of any one of the first to twenty-second embodiments, wherein the composition is substantially free of cellulosic fibers. The cellulosic fibers may be wood fibers.

In a twenty-fourth embodiment, the present disclosure provides the method of any one of the first to nineteenth embodiments, wherein the composition is substantially free of reinforcing fibers.

In a twenty-fifth embodiment, the present disclosure provides the method of any one of the first to twenty-fourth embodiments, wherein the inorganic filler has at least one dimension up to 100 micrometers.

In a twenty- sixth embodiment, the present disclosure provides the method of any one of the first to twenty-fifth embodiments, wherein the inorganic filler comprises at least one of hollow ceramic microspheres, carbon, or a metal oxide.

In a twenty- seventh embodiment, the present disclosure provides the method of the twenty-sixth embodiment, wherein the hollow ceramic microspheres are surface treated with a coupling agent.

In a twenty-eighth embodiment, the present disclosure provides the method of the twenty-sixth embodiment, wherein the hollow ceramic microspheres are not surface treated with a coupling agent.

In a twenty-ninth embodiment, the present disclosure provides the method of any one of the twenty-sixth to twenty-eighth embodiments, wherein an isostatic pressure at which ten percent by volume of hollow ceramic microspheres collapses is at least about 17 MPa.

In a thirtieth embodiment, the present disclosure provides the method of any one of the first to twenty-ninth embodiments, wherein the composition further comprises at least one of a colorant, dispersant, floating or anti-settling agent, flow or processing agent, wetting agent, anti-ozonant, adhesion promoter, odor scavengers, acid neutralizer, or antistatic agent.

In a thirty-first embodiment, the present disclosure provides the method of any one of the first to thirtieth embodiments, wherein in the three-dimensional article, adhesion between the first layer and second layer is better than in a comparative three-dimensional article, wherein the comparative three-dimensional article is prepared according to the method of making the three-dimension article except that the composition does not comprise inorganic filler.

In a thirty-second embodiment, the present disclosure provides the method of any one of the first to thirty-first embodiments, wherein making the three-dimensional article is faster than making a comparative three-dimensional article, wherein the comparative three-dimensional article is prepared according to the method of making the three-dimension article except that the composition does not comprise inorganic filler.

In a thirty-third embodiment, the present disclosure provides the method of any one of the first to thirty-second embodiments, wherein a cooling time of at least one of the first layer or second layer is shorter than in a comparative

three-dimensional article, wherein the comparative three-dimensional article is prepared according to the method of making the three-dimension article except that the composition does not comprise hollow ceramic microspheres.

In a thirty-fourth embodiment, the present disclosure provides the method of any one of the first to thirty-third embodiments, further comprising:

retrieving, from a non-transitory machine readable medium, data representing a model of the three-dimensional article; and
executing, by one or more processors interfacing with a manufacturing device, manufacturing instructions using the data.

In a thirty-fifth embodiment, the present disclosure provides the method of the thirty-fourth embodiment, further comprising generating, by the manufacturing device, the three-dimensional article.

In a thirty-sixth embodiment, the present disclosure provides a three-dimensional article made by the method of any one of the first to thirty-fifth embodiments.

In a thirty-seventh embodiment, the present disclosure provides a filament for use in fused filament fabrication, the filament comprising an inorganic filler and a fluoropolymer, wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

In a thirty-eighth embodiment, the present disclosure provides the filament of the thirty-seventh embodiment, having an ovality of up to ten percent.

In a thirty-ninth embodiment, the present disclosure provides a filament comprising an inorganic filler and a fluoropolymer, wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C, and wherein the filament has an ovality of up to ten percent.

In a fortieth embodiment, the present disclosure provides the filament of any one of the thirty-seventh to thirty-ninth embodiment, wherein the fluoropolymer comprises interpolymerized units from at least one partially fluorinated or perfluorinated ethylenically unsaturated monomer represented by formula $RCF=CR_2$, wherein each R is independently fluoro, chloro, bromo, hydrogen, a fluoroalkyl group having up to 8 carbon atoms and optionally interrupted by one or more oxygen atoms, a fluoroalkoxy group having up to 8 carbon atoms and optionally interrupted by one or more oxygen atoms, alkyl having up to 10 carbon atoms, alkoxy having up to 8 carbon atoms, or aryl having up to 8 carbon atoms.

In a forty-first embodiment, the present disclosure provides the filament of any one of the thirty-seventh to fortieth embodiments, wherein the fluoropolymer is an amorphous fluoropolymer having a glass transition temperature of up to 280 °C.

In a forty-second embodiment, the present disclosure provides the filament of the forty-first embodiment, wherein the amorphous fluoropolymer comprises interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, a perfluoroallyl ether, a perfluorinated 1,3-dioxole optionally substituted by perfluoro$C_{1-4}$alkyl or perfluoro$C_{1-4}$alkoxy, poly(perfluoro-4-vinyloxy-1-butene), poly(perfluoro-4-vinyloxy-3-methyl-1-butene), or a perfluoro-2-methylene-1,3-dioxolane that is unsubstituted, substituted by at least one of perfluoro$C_{1-4}$alkyl or perfluoro$C_{1-4}$alkoxy$C_{1-4}$alkyl, or fused to a 5- or 6-membered perfluorinated ring optionally containing one oxygen atom.

In a forty-third embodiment, the present disclosure provides the filament of the forty-first or forty-second embodiment, wherein the fluoropolymer is an amorphous fluoropolymer comprising less than 50 percent by weight interpolymerized units of vinylidene fluoride.

In a forty-fourth embodiment, the present disclosure provides the filament of the forty-second or forty-third embodiment, wherein the fluoropolymer further comprises a cure site, and wherein filament further comprises a curing agent.

In a forty-fifth embodiment, the present disclosure provides the filament of any one of the thirty-seventh to fortieth embodiments, wherein the fluoropolymer is the semi-crystalline fluorothermoplastic.

In a forty-sixth embodiment, the present disclosure provides the filament of the forty-fifth embodiment, wherein the semi-crystalline fluorothermoplastic polymer includes at least 25, 30, 35, 40, 45, 50, 55, or 60 percent by weight interpolymerized units of tetrafluoroethylene.

In a forty-seventh embodiment, the present disclosure provides the filament of the forty-fifth or forty-sixth embodiment, wherein the semi-crystalline fluorothermoplastic comprises interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, or a perfluoroallyl ether.

In a forty-eighth embodiment, the present disclosure provides the filament of any one of the forty-fifth to forty-seventh embodiments, wherein the semi-crystalline fluorothermoplastic comprises interpolymerized units of tetrafluoroethylene, hexafluoropropylene, and ethylene.

In a forty-ninth embodiment, the present disclosure provides the filament of any one of the forty-fifth to forty-seventh embodiments, wherein the semi-crystalline fluorothermoplastic is perfluorinated.

In a fiftieth embodiment, the present disclosure provides the filament of any one of the thirty-seventh to forty-ninth embodiments, wherein the filament comprises at least 50 percent by weight of the fluoropolymer, based on the total weight of the filament.

In a fifty-first embodiment, the present disclosure provides the filament of any one of the thirty-seventh to fiftieth embodiments, wherein the filament comprises greater than 80 percent by weight of the fluoropolymer, based on the total weight of the filament.

In a fifty-second embodiment, the present disclosure provides the filament of any one of the thirty-seventh to fiftieth embodiments, wherein the filament comprises at least 85 percent by weight of the fluoropolymer, based on the total weight of the filament.

In a fifty-third embodiment, the present disclosure provides the filament of the fifty-second embodiment, wherein the filament comprises at least 0.01 percent by weight of the inorganic filler, based on the total weight of the filament.

In a fifty-fourth embodiment, the present disclosure provides the filament of any one of the thirty-seventh to fifty-third embodiments, wherein the inorganic filler comprises at least one of metals, metal oxides, metal sulfides, non-oxide ceramics, oxide ceramics, carbon, silicates, titania, zirconia, silica, or a pigment.

In a fifty-fifth embodiment, the present disclosure provides the filament of any one of the thirty-seventh to fifty-fourth embodiments, wherein the inorganic filler comprises at least one of fibers, particles, tubes, or hollow spheres.

In a fifty-sixth embodiment, the present disclosure provides the filament of any one of the thirty-seventh to fifty-fifth embodiments, wherein the inorganic filler has a length-to-width aspect ratio of less than 10,000 to 1, 2000:1, 1000:1, 500:1, 100:1, 50:1, 25:1, 10:1, 5:1, or 2:1.

In a fifty-seventh embodiment, the present disclosure provides the filament of any one of the thirty-seventh to fifty-fourth embodiments, wherein the filament is substantially free of glass fibers.

In a fifty-eighth embodiment, the present disclosure provides the filament of any one of the thirty-seventh to fifty-seventh embodiments, wherein the filament is substantially free of cellulosic fibers. The cellulosic fibers may be wood fibers.

In a fifty-ninth embodiment, the present disclosure provides the filament of any one of the thirty-seventh to fifty-fourth embodiments, wherein the filament is substantially free of reinforcing fibers.

In a sixtieth embodiment, the present disclosure provides the filament of any one of the thirty-seventh to fifty-ninth embodiments, wherein the inorganic filler has at least one dimension up to 100 micrometers.

In a sixty-first embodiment, the present disclosure provides the filament of any one of the thirty-seventh to sixtieth embodiments, wherein the inorganic filler comprises at least one of hollow ceramic microspheres, carbon, or a metal oxide.

In a sixty-second embodiment, the present disclosure provides the filament of the sixty-first embodiment, wherein the hollow ceramic microspheres are surface treated with a coupling agent.

In a sixty-third embodiment, the present disclosure provides the filament of the sixty-first embodiment, wherein the hollow ceramic microspheres are not surface treated with a coupling agent.

In a sixty-fourth embodiment, the present disclosure provides the filament of any one of the sixty-first to sixty-third embodiments, wherein an isostatic pressure at which ten percent by volume of hollow ceramic microspheres collapses is at least about 17 MPa.

In a sixty-fifth embodiment, the present disclosure provides the filament of any one of the thirty-seventh to sixty-fourth embodiments, wherein the composition further comprises at least one of a colorant, dispersant, floating or anti-settling agent, flow or processing agent, wetting agent, anti-ozonant, adhesion promoter, odor scavengers, acid neutralizer, or antistatic agent.

In a sixty-sixth embodiment, the present disclosure provides the filament of any one of the thirty-seventh to sixty-fifth embodiments, wherein the filament has a length-to-width aspect ratio of at least 10:1, 25:1, 50:1, 100:1, 150:1, or 200:1.

In a sixty-seventh embodiment, the present disclosure provides a composition for use in melt extrusion additive manufacturing, the composition comprising an inorganic filler and a fluoropolymer, wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

In a sixty-eighth embodiment, the present disclosure provides the composition of the sixty-seventh embodiment, for improving adhesion between layers of a three-dimensional article made by melt extrusion additive manufacturing in comparison to a three-dimensional article comprising the fluoropolymer but no inorganic filler.

In a sixty-ninth embodiment, the present disclosure provides a composition for increasing the speed of making a three-dimensional article by melt extrusion additive manufacturing, the composition comprising an inorganic filler and a fluoropolymer, wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

In a seventieth embodiment, the present disclosure provides the composition of any one of the sixty-seventh to sixty-ninth embodiments, wherein the fluoropolymer comprises interpolymerized units from at least one partially fluorinated or perfluorinated ethylenically unsaturated monomer represented by formula $RCF=CR_2$, wherein each R is independently fluoro, chloro, bromo, hydrogen, a fluoroalkyl group having up to 8 carbon atoms and optionally interrupted by one or more oxygen atoms, a fluoroalkoxy group having up to 8 carbon atoms and optionally interrupted by one or more oxygen atoms, alkyl having up to 10 carbon atoms, alkoxy having up to 8 carbon atoms, or aryl having up to 8 carbon atoms.

In a seventy-first embodiment, the present disclosure provides the composition of any one of the sixty-seventh to -seventieth embodiments, wherein the fluoropolymer is an amorphous fluoropolymer having a glass transition temperature of up to 280 °C.

In a seventy-second embodiment, the present disclosure provides the composition of the seventy-first embodiment, wherein the amorphous fluoropolymer comprises interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, a perfluoroallyl ether, a perfluorinated 1,3-dioxole optionally substituted by perfluoro$C_{1-4}$alkyl or perfluoro$C_{1-4}$alkoxy, poly(perfluoro-4-vinyloxy-1-butene), poly(perfluoro-4-vinyloxy-3-methyl-1-butene), or a perfluoro-2-methylene-1,3-dioxolane that is unsubstituted, substituted by at least one of perfluoro$C_{1-4}$alkyl or perfluoro$C_{1-4}$alkoxy$C_{1-4}$alkyl, or fused to a 5- or 6-membered perfluorinated ring optionally containing one oxygen atom.

In a seventy-third embodiment, the present disclosure provides the composition of the seventy-first or seventy-second embodiment, wherein the fluoropolymer is an amorphous fluoropolymer comprising less than 50 percent by weight interpolymerized units of vinylidene fluoride.

In a seventy-fourth embodiment, the present disclosure provides the composition of the seventy-second or seventy-third embodiment, wherein the fluoropolymer further comprises a cure site, and wherein composition further comprises a curing agent.

In a seventy-fourth embodiment, the present disclosure provides the composition of any one of the sixty-seventh to -seventieth embodiments, wherein the fluoropolymer is the semi-crystalline fluorothermoplastic.

In a seventy-fifth embodiment, the present disclosure provides the composition of the seventy-fourth embodiment, wherein the semi-crystalline fluorothermoplastic polymer includes at least 25, 30, 35, 40, 45, 50, 55, or 60 percent by weight interpolymerized units of tetrafluoroethylene.

In a seventy-sixth embodiment, the present disclosure provides the composition of the seventy-fourth or seventy-fifth embodiments, wherein the semi-crystalline fluorothermoplastic comprises interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, or a perfluoroallyl ether.

In a seventy-seventh embodiment, the present disclosure provides the composition of any one of the seventy-fourth to seventy-sixth embodiments, wherein the semi-crystalline fluorothermoplastic comprises interpolymerized units of tetrafluoroethylene, hexafluoropropylene, and ethylene.

In a seventy-eighth embodiment, the present disclosure provides the composition of any one of the seventy-fourth to seventy-sixth embodiments, wherein the semi-crystalline fluorothermoplastic is perfluorinated.

In a seventy-ninth embodiment, the present disclosure provides the composition of any one of the sixty-seventh to seventy-eighth embodiments, wherein the composition at least 50 percent by weight of the fluoropolymer, based on the total weight of the composition.

In an eightieth embodiment, the present disclosure provides the composition of any one of the sixty-seventh to seventy-ninth embodiments, wherein the composition greater than 80 percent by weight of the fluoropolymer, based on the total weight of the composition.

In an eighty-first embodiment, the present disclosure provides the composition of the eightieth embodiment, wherein the composition comprises at least 85 percent by weight of the fluoropolymer, based on the total weight of the composition.

In an eighty-second embodiment, the present disclosure provides the composition of any one of the sixty-seventh to eighty-first embodiments, wherein the composition comprises at least 0.01 percent by weight of the inorganic filler, based on the total weight of the composition.

In an eighty-third embodiment, the present disclosure provides the composition of any one of the sixty-seventh to eighty-second embodiments, wherein the inorganic filler comprises at least one of metals, metal oxides, metal sulfides,

non-oxide ceramics, oxide ceramics, carbon, silicates, titania, zirconia, silica, or a pigment.

In an eighty-fourth embodiment, the present disclosure provides the composition of any one of the sixty-seventh to eighty-third embodiments, wherein the inorganic filler comprises at least one of fibers, particles, tubes, or hollow spheres.

In an eighty-fifth embodiment, the present disclosure provides the composition of any one of the sixty-seventh to eighty-fourth embodiments, wherein the inorganic filler has a length-to-width aspect ratio of less than 10,000 to 1, 2000:1, 1000:1, 500:1, 100:1, 50:1, 25:1, 10:1, 5:1, or 2:1.

In an eighty-sixth embodiment, the present disclosure provides the composition of any one of the sixty-seventh to eighty-third embodiments, wherein the composition is substantially free of glass fibers.

In an eighty-seventh embodiment, the present disclosure provides the composition of any one of the sixty-seventh to eighty-sixth embodiments, wherein the composition is substantially free of cellulosic fibers. The cellulosic fibers may be wood fibers.

In an eighty-eighth embodiment, the present disclosure provides the composition of any one of the sixty-seventh to eighty-third embodiments, wherein the composition is substantially free of reinforcing fibers.

In an eighty-ninth embodiment, the present disclosure provides the composition of any one of the sixty-seventh to eighty-eighth embodiments, wherein the inorganic filler has at least one dimension up to 100 micrometers.

In a ninetieth embodiment, the present disclosure provides the composition of any one of the sixty-seventh to eighty-ninth embodiments, wherein the inorganic filler comprises at least one of hollow ceramic microspheres, carbon, or a metal oxide.

In a ninety-first embodiment, the present disclosure provides the composition of the ninetieth embodiment, wherein the hollow ceramic microspheres are surface treated with a coupling agent.

In a ninety-second embodiment, the present disclosure provides the composition of the ninetieth embodiment, wherein the hollow ceramic microspheres are not surface treated with a coupling agent.

In a ninety-third embodiment, the present disclosure provides the composition of any one of the ninetieth to ninety-second embodiments, wherein an isostatic pressure at which ten percent by volume of hollow ceramic microspheres collapses is at least about 17 MPa.

In a ninety-fourth embodiment, the present disclosure provides the composition of any one of the sixty-seventh to ninety-third embodiments, wherein the composition further comprises at least one of a colorant, dispersant, floating or anti-settling agent, flow or processing agent, wetting agent, anti-ozonant, adhesion promoter, odor scavengers, acid neutralizer, or antistatic agent.

In a ninety-fifth embodiment, the present disclosure provides the method of any one of the first to thirty-fifth embodiments, wherein the first layer of the three-dimensional article is extruded onto at least one of a cotton denim cloth or a fluoropolymer substrate.

In a ninety-sixth embodiment, the present disclosure provides the method of the ninety-fifth embodiment, wherein the fluoropolymer substrate comprises interpolymerized units of TFE, HFP, and ethylene.

In a ninety-seventh embodiment, the present disclosure provides the filament of any one of the thirty-seventh to sixty-sixth embodiment, wherein the filament comprises a semi-crystalline thermoplastic comprising interpolymerized units of TFE, HFP, and ethylene, and wherein the filament has a maximum cross-sectional dimension in a range from two millimeters to three millimeters.

## EXAMPLES

The following specific, but non-limiting, examples will serve to illustrate the present disclosure. Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, Missouri, or may be synthesized by conventional methods. These abbreviations are used in the following examples: °C = degrees Celsius, mm = millimeters, cm = centimeters, rpm = revolutions per minute, wt % = weight percent.

### Control Example A

A filament was extruded from a granulate obtained from 3M Company, St. Paul, Minn. under the trade designation "3M™Dyneon™ Fluoroplastic HTE 1705Z", using a Brabender single-screw extruder and a single-strand die of 4.5 mm diameter. The extruder temperature zones were set to 230 °C/225 °C/220 °C/215 °C, and the screw speed was 10 rpm. The extrudate was pulled through a cooling water bath first, then fed into a beltpull running at 8 feet (2.44 m)/min. The resulting filament had a diameter between 2.7 and 2.9 mm and an ovality better than 5%. The fluoroplastic has a melt flow index of 4.1 grams per ten minutes (5kg/265°C) measured according to DIN EN ISO 1133-1.

Example 1

Example 1 was prepared using a ZE 25A twin screw extruder with a 25 mm diameter screw (manufactured by KraussMaffei Berstorff, Munich, Germany). The base fluoroplastic was obtained from 3M Company, St. Paul, Minn., under the trade designation "3M™Dynamar™Polymer Processing Additive FX 5914".

To prepare Example 1, "iM16K" glass bubbles (hollow glass microspheres with isostatic crush strength of 16,000 psi (110.3 MPa), and true density of 0.46 g/cc, obtained from 3M Company, under trade designation "3M GLASS BUBBLES iM16K") were introduced into the fluoroplastic. The amount of glass bubbles fed into the fluoroplastic was sufficient to result in 15 wt % glass bubbles with respect to the total weight of fluoroplastic and glass bubbles. The "iM16K" glass bubbles and fluoroplastic were allowed to blend via the twin screw process.

The resulting fluoroplastic-glass bubble blend was extruded through a strand die, with an approximately 5 mm diameter into a water bath. The temperature of the water bath was about 20 °C. The extruder screw speed was 200 rpm. The extruder temperature profile used to produce filaments was:

| Zone 2 | Zone 3 | Zone 4 | Zone 5 | Zone 6 | Zone 7 | Die |
|---|---|---|---|---|---|---|
| 200 °C | 230 °C | 240 °C | 250 °C | 255 °C | 260 °C | 260 °C |

The strands were cut into pellets using a GS25 E4 pelletizer (manufactured by Reduction Engineering Scheer, Kent, OH).

The MFI for Example 1 was measured on a Tinius Olsen Extrusion Plastimeter equipped with a WL 987 Lifter and a MP 987 Controller. 5 measurements were made during a single run. Setpoints were 265 °C and 5 kg mass. The first two measurements were discarded because they were recorded during the purge region of the piston travel (0.75 g/10 minutes and 0.84 g/10 minutes). The final three were respectively 1.13 g/10 minutes, 1.14 g/10 minutes, 1.15 g/10 minutes. The 1.14 value was obtained in the piston position corresponding to the measurement region described in ASTM 1238. MFI of the sample was therefore determined to be 1.1 g/10 minutes (265 °C and 5 kg).

A filament was extruded from the pellets using a Brabender single-screw extruder and a single-strand die of 3.3 mm diameter. The extruder temperature zones were set to 225 °C/222 °C/218 °C/215 °C, and the screw speed was 5 rpm. The extrudate was pulled through a cooling water bath first, then fed into a beltpull running at 7 feet (2.13 m)/min. The resulting filament had a diameter between 2.7 and 2.9 mm, and an ovality better than 5%.

Samples were printed from the filament on an "AW3D AXIOM" Dual Desktop 3D Printer, obtained from "AIRWOLF3D", Costa Mesa, Cal., in a variant that had the filament drive mounted right above the extruder. The printbed was cotton denim cloth glued to an underlying PMMA plate, heated to 130°C. The hotend was heated to 340°C.

For the samples, a hollow cone was printed at 30 mm/s extrusion speed. To ensure good attachment, the first layer was printed with 20 mm/s speed and a 200% extrusion multiplier. The cones were 35 mm diameter and 60 mm height, printed with only one perimeter, no infill and no solid bottom layer, making the toolpath a single continuous spiral. A single loop of skirt 3 mm from the part was placed to start up the extrusion process.

As cones were printed from the base to the tip, the circumference of the cone decreased, leading to a decrease in the nozzle round-trip time. As a result, as printing proceeded higher up the cone, a volume of extruded polymer had less time to cool down and solidify before a new layer was printed on top. Incomplete solidification can lead to sag and to a shear distortion due to the motion of the nozzle.

A sample cone printed from Control Example A had a minor defect with a distance from the base of 33.9 mm. The diameter of the cone at this height was 13.42 mm, and the nozzle-round-trip time at this height was 1.40 seconds. The sample cone printed from Control Example A also had a major defect: a depression and hole in the side. The major defect had a distance from the base of 35.9 mm. The diameter of the cone at this height was 11.55 mm, and the nozzle-round-trip time at this height was 1.21 seconds.

A sample cone printed from Example 1 had a defect at a distance from the base of 40.4 mm. The diameter of the cone at this height was 9.8 mm, and the nozzle-round-trip time at this height was 1.03 seconds.

A shorter nozzle-round-trip time can be achieved with the filament of Example 1 than with Control Example A, suggesting more rapid cooling and solidification in Example 1. The difference in nozzle-round-trip time between major defects was 0.18 second, suggesting a 15% reduction in cooling time.

Example 2

Example 2 was prepared using a ZE 25A twin screw extruder with a 25 mm diameter screw (manufactured by KraussMaffei Berstorff, Munich, Germany). The base fluoroplastic was Fluoroplastic PFA 8506TAZ (available from 3M Company under the trade designation "3M™ Dyneon™ Fluoroplastic PFA 8506TAZ").

To prepare Example 2, "Grade H" graphene nanoplatelets (obtained from XG Sciences, Lansing, MI, USA,

under the trade designation "xGnP Graphene Nanoplatelets - Grade H") were introduced into the fluoroplastic. The amount of graphene nanoplatelets fed into the fluoroplastic was sufficient to result in 4.5 wt % graphene nanoplatelets with respect to the total weight of fluoroplastic and graphene nanoplatelets. The "Grade H" graphene nanoplatelets and fluoroplastic were allowed to blend via the twin screw process.

The resulting fluoroplastic-graphene nanoplatelet blend was extruded through a strand die, with an approximately 5 mm diameter into a water bath. The temperature of the water bath was about 20 °C. The extruder screw speed was 95 rpm. The extruder temperature profile used to produce filaments was:

| Zone 2 | Zone 3 | Zone 4 | Zone 5 | Zone 6 | Zone 7 | Die |
|---|---|---|---|---|---|---|
| 280 °C | 280 °C | 310 °C | 310 °C | 310 °C | 310 °C | 310 °C |

Example 3

Example 3 was prepared using a ZE 25A twin screw extruder with a 25 mm diameter screw (manufactured by KraussMaffei Berstorff, Munich, Germany). The base fluoroplastic was Fluoroplastic PFA 8506TAZ (available from 3M Company under the trade designation "3M™ Dyneon™ Fluoroplastic PFA 8506TAZ").

To prepare Example 3, "Zano Al-10" nano Al-doped zinc oxide (supplied by Umicore Zinc Chemicals, Angleur, Belgium under the trade designation "Zano Al-10") were introduced into the fluoroplastic. The amount of Al-doped zinc oxide fed into the fluoroplastic was sufficient to result in 11 wt % Al-doped zinc oxide with respect to the total weight of fluoroplastic and Al-doped zinc oxide. The Al-doped zinc oxide and fluoroplastic were allowed to blend via the twin screw process.

The resulting fluoroplastic- Al-doped zinc oxide blend was extruded through a strand die, with an approximately 5 mm diameter into a water bath. The temperature of the water bath was about 20 °C. The extruder screw speed was 95 rpm. The extruder temperature profile used to produce filaments was:

| Zone 2 | Zone 3 | Zone 4 | Zone 5 | Zone 6 | Zone 7 | Die |
|---|---|---|---|---|---|---|
| 280 °C | 280 °C | 310 °C | 310 °C | 310 °C | 310 °C | 310 °C |

Examples 4 and 5

Examples 4 and 5 were prepared using a ZE 25A twin screw extruder with a 25 mm diameter screw (manufactured by KraussMaffei Berstorff, Munich, Germany). The base fluoroplastic was obtained from 3M Company under the designation "3M™ Dyneon™ Fluoroplastic THV 610AZ".

To prepare Example 4, "iM16K" glass bubbles were introduced into the fluoroplastic. The amount of glass bubbles fed into the fluoroplastic was sufficient to result in 4 wt. % glass bubbles with respect to the total weight of fluoroplastic and glass bubbles. The "iM16K" glass bubbles and fluoroplastic were allowed to blend via the twin screw process.

The resulting fluoroplastic-glass bubble blend was extruded through a strand die, with an approximately 5 mm diameter into a water bath. The temperature of the water bath was about 20 °C. The extruder screw speed was 150 rpm. The extruder temperature profile used to produce filaments (strands) was:

| Zone 2 | Zone 3 | Zone 4 | Zone 5 | Zone 6 | Zone 7 | Die |
|---|---|---|---|---|---|---|
| 210 °C | 230 °C | 240 °C | 250 °C | 260 °C | 260 °C | 270 °C |

To prepare Example 5, "iM16K" glass bubbles were introduced into the fluoroplastic. The amount of glass bubbles fed into the fluoroplastic was sufficient to result in 13 wt. % glass bubbles with respect to the total weight of fluoroplastic and glass bubbles. The "iM16K" glass bubbles and fluoroplastic were allowed to blend via the twin screw process.

The resulting fluoroplastic-glass bubble blend was extruded through a strand die, with an approximately 5 mm diameter into a water bath. The temperature of the water bath was about 20 °C. The extruder screw speed was 200 rpm. The extruder temperature profile used to produce filaments (strands) was:

| Zone 2 | Zone 3 | Zone 4 | Zone 5 | Zone 6 | Zone 7 | Die |
|---|---|---|---|---|---|---|
| 200 °C | 210 °C | 220 °C | 230 °C | 235 °C | 240 °C | 250 °C |

The strands were cut into pellets using a GS25 E4 pelletizer (manufactured by Reduction Engineering Scheer, Kent, OH) at a rotor speed of 22 rpm.

## Claims

1. A method of making a three-dimensional article, the method comprising:

   heating a composition comprising an inorganic filler and a fluoropolymer;
   extruding the composition in molten form from an extrusion head to provide at least a portion of a first layer of the three dimensional article; and
   extruding at least a second layer of the composition in molten form onto at least the portion of the first layer to make at least a portion of the three dimensional article,
   wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

2. The method of claim 1, wherein the fluoropolymer comprises interpolymerized units from at least one partially fluorinated or perfluorinated ethylenically unsaturated monomer represented by formula $RCF=CR_2$, wherein each R is independently fluoro, chloro, bromo, hydrogen, a fluoroalkyl group having up to 8 carbon atoms and optionally interrupted by one or more oxygen atoms, a fluoroalkoxy group having up to 8 carbon atoms and optionally interrupted by one or more oxygen atoms, alkyl having up to 10 carbon atoms, alkoxy having up to 8 carbon atoms, or aryl having up to 8 carbon atoms.

3. The method of claim 1 or 2, wherein the fluoropolymer is an amorphous fluoropolymer comprising interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, a perfluorovinyl ether, a perfluoroallyl ether, a perfluorinated 1,3-dioxole optionally substituted by perfluoro$C_{1-4}$alkyl or perfluoro$C_{1-4}$alkoxy, poly(perfluoro-4-vinyloxy-1-butene), poly(perfluoro-4-vinyloxy-3-methyl-1-butene), or a perfluoro-2-methylene-1,3-dioxolane that is unsubstituted, substituted by at least one of perfluoro$C_{1-4}$alkyl or perfluoro$C_{1-4}$alkoxy$C_{1-4}$alkyl, or fused to a 5- or 6-membered perfluorinated ring optionally containing one oxygen atom.

4. The method of claim 1 or 2, wherein the fluoropolymer is a semi-crystalline fluorothermopolymer comprising interpolymerized units of at least one of vinylidene fluoride, tetrafluoroethylene, hexafluoropropylene, chlorotrifluoroethylene, 2-chloropentafluoropropene, dichlorodifluoroethylene, 1,1-dichlorofluoroethylene, 1-hydropentafluoropropylene, 2-hydropentafluoropropylene, perfluorovinyl ethers, or perfluoroallyl ethers.

5. The method of any one of claims 1 to 4, wherein the inorganic filler comprises at least one of metals, metal oxides, metal sulfides, non-oxide ceramics, oxide ceramics, carbon, silicates, titania, zirconia, silica, or a pigment.

6. The method of any one of claims 1 to 5, wherein the inorganic filler comprises at least one of fibers, particles, tubes, or hollow spheres.

7. The method of any one of claims 1 to 6, wherein the inorganic filler has a length-to-width aspect ratio of less than 10,000 to 1.

8. The method of any one of claims 1 to 7, wherein the inorganic filler comprises hollow ceramic microspheres.

9. The method of claim 8, wherein the hollow ceramic microspheres are not surface treated with a coupling agent.

10. The method of any one of claims 1 to 9, wherein the composition comprises greater than 80 percent by weight of the fluoropolymer, based on the total weight of the composition.

**11.** The method of any one of claims 1 to 10, wherein the composition is substantially free of cellulosic fibers and glass fibers.

**12.** The method of any one of claims 1 to 11, wherein the composition is provided as a filament comprising the fluoropolymer and inorganic filler.

**13.** The method of any one of claims 1 to 12, further comprising:

retrieving, from a non-transitory machine readable medium, data representing a model of the three-dimensional article; and
executing, by one or more processors interfacing with a manufacturing device, manufacturing instructions using the data.

**14.** A filament for use in fused filament fabrication, the filament comprising an inorganic filler and a fluoropolymer, wherein the fluoropolymer is a semi-crystalline fluorothermoplastic and has a melting point of up to 325 °C and less than 50 percent by weight interpolymerized units of vinylidene fluoride or wherein the fluoropolymer is amorphous and has a glass transition temperature of up to 280 °C.

**15.** The filament of claim 14, wherein the fluoropolymer comprises interpolymerized units from at least one partially fluorinated or perfluorinated ethylenically unsaturated monomer represented by formula $RCF=CR_2$, wherein each R is independently fluoro, chloro, bromo, hydrogen, a fluoroalkyl group having up to 8 carbon atoms and optionally interrupted by one or more oxygen atoms, a fluoroalkoxy group having up to 8 carbon atoms and optionally interrupted by one or more oxygen atoms, alkyl having up to 10 carbon atoms, alkoxy having up to 8 carbon atoms, or aryl having up to 8 carbon atoms.

## Patentansprüche

**1.** Ein Verfahren zum Herstellen eines dreidimensionalen Artikels, wobei das Verfahren umfasst:

Erwärmen einer Zusammensetzung, die einen anorganischen Füllstoff und ein Fluorpolymer umfasst;
Extrudieren der Zusammensetzung in geschmolzener Form aus einem Extrusionskopf, um mindestens einen Abschnitt einer ersten Schicht des dreidimensionalen Artikels bereitzustellen; und
Extrudieren mindestens einer zweiten Schicht der Zusammensetzung in geschmolzener Form auf mindestens den Abschnitt der ersten Schicht, um mindestens einen Abschnitt des dreidimensionalen Artikels herzustellen, wobei das Fluorpolymer ein halbkristalliner Fluorthermoplast ist und einen Schmelzpunkt von bis zu 325 °C und weniger als 50 Gewichtsprozent interpolymerisierte Einheiten von Vinylidenfluorid aufweist oder wobei das Fluorpolymer amorph ist und eine Glasübergangstemperatur von bis zu 280 °C aufweist.

**2.** Das Verfahren nach Anspruch 1, wobei das Fluorpolymer interpolymerisierte Einheiten aus mindestens einem teilweise fluorierten oder perfluorierten ethylenisch ungesättigten Monomer der Formel $RCF=CR_2$ umfasst, wobei jedes R unabhängig Fluor, Chlor, Brom, Wasserstoff, eine Fluoralkylgruppe mit bis zu 8 Kohlenstoffatomen, die wahlweise durch ein oder mehrere Sauerstoffatome unterbrochen ist, eine Fluoralkoxygruppe mit bis zu 8 Kohlenstoffatomen, die wahlweise durch ein oder mehrere Sauerstoffatome unterbrochen ist, Alkyl mit bis zu 10 Kohlenstoffatomen, Alkoxy mit bis zu 8 Kohlenstoffatomen oder Aryl mit bis zu 8 Kohlenstoffatomen ist.

**3.** Das Verfahren nach Anspruch 1 oder 2, wobei das Fluorpolymer ein amorphes Fluorpolymer ist, das interpolymerisierte Einheiten von mindestens einem von Vinylidenfluorid, Tetrafluorethylen, Hexafluorpropylen, Chlortrifluorethylen, 2-Chlorpentafluorpropen, Dichlordifluorethylen, 1,1-Dichlorfluorethylen, 1-Hydropentafluorpropylen, 2-Hydropentafluorpropylen, einem Perfluorvinylether, einem Perfluorallylether, einem perfluorierten 1,3-Dioxol, wahlweise substituiert mit Perfluor-$C_{1-4}$-alkyl oder Perfluor-$C_{1-4}$-alkoxy, Poly(perfluor-4-vinyloxy-1-buten), Poly(perfluor-4-vinyloxy-3-methyl-1-buten), oder ein Perfluor-2-methylen-1,3-dioxolan, das unsubstituiert, durch mindestens eines von Perfluor-$C_{1-4}$-alkyl oder Perfluor-$C_{1-4}$-alkoxy-$C_{1-4}$-alkyl substituiert oder an einen 5-oder 6-gliedrigen perfluorierten Ring kondensiert ist, der wahlweise ein Sauerstoffatom enthält.

**4.** Das Verfahren nach Anspruch 1 oder 2, wobei das Fluorpolymer ein halbkristallines Fluorthermopolymer ist, das interpolymerisierte Einheiten von mindestens einem von Vinylidenfluorid, Tetrafluorethylen, Hexafluorpropylen, Chlortrifluorethylen, 2-Chlorpentafluorpropen, Dichlordifluorethylen, 1,1-Dichlorfluorethylen, 1-Hydropentafluorpropylen, 2-Hydropentafluorpropylen, Perfluorvinylether oder Perfluorallylether ist.

5. Das Verfahren nach einem der Ansprüche 1 bis 4, wobei der anorganische Füllstoff mindestens eines von Metallen, Metalloxiden, Metallsulfiden, Nichtoxidkeramiken, Oxidkeramiken, Kohlenstoff, Silicaten, Titandioxid, Zirconiumdioxid, Siliciumdioxid oder einem Pigment umfasst.

6. Das Verfahren nach einem der Ansprüche 1 bis 5, wobei der anorganische Füllstoff mindestens eines von Fasern, Teilchen, Röhren oder Hohlkugeln umfasst.

7. Das Verfahren nach einem der Ansprüche 1 bis 6, wobei der anorganische Füllstoff ein Längen-Breiten-Seitenverhältnis von weniger als 10.000 zu 1 aufweist.

8. Das Verfahren nach einem der Ansprüche 1 bis 7, wobei der anorganische Füllstoff hohle Keramikmikrokugeln umfasst.

9. Das Verfahren nach Anspruch 8, wobei die hohlen Keramikmikrokugeln nicht mit einem Haftvermittler oberflächenbehandelt sind.

10. Das Verfahren nach einem der Ansprüche 1 bis 9, wobei die Zusammensetzung bezogen auf das Gesamtgewicht der Zusammensetzung mehr als 80 Gewichtsprozent des Fluorpolymers umfasst.

11. Das Verfahren nach einem der Ansprüche 1 bis 10, wobei die Zusammensetzung im Wesentlichen frei von Cellulosefasern und Glasfasern ist.

12. Das Verfahren nach einem der Ansprüche 1 bis 11, wobei die Zusammensetzung als Filament bereitgestellt wird, das Fluorpolymer und anorganischen Füllstoff umfasst.

13. Das Verfahren nach einem der Ansprüche 1 bis 12, ferner umfassend:

Abrufen von Daten, die ein Modell des dreidimensionalen Artikels darstellen, aus einem nichtflüchtigen maschinenlesbaren Medium; und
Ausführen von Herstellungsanweisungen unter Verwendung der Daten durch einen oder mehrere Prozessoren, die über eine Schnittstelle mit einer Herstellungsvorrichtung verbunden sind.

14. Ein Filament zur Verwendung bei der Schmelzfilamentherstellung, wobei das Filament einen anorganischen Füllstoff und ein Fluorpolymer umfasst, wobei das Fluorpolymer ein halbkristalliner Fluorthermoplast ist und einen Schmelzpunkt von bis zu 325 °C und weniger als 50 Gewichtsprozent interpolymerisierte Einheiten von Vinylidenfluorid aufweist oder wobei das Fluorpolymer amorph ist und eine Glasübergangstemperatur von bis zu 280 °C aufweist.

15. Das Filament nach Anspruch 14, wobei das Fluorpolymer interpolymerisierte Einheiten von mindestens einem teilweise fluorierten oder perfluorierten ethylenisch ungesättigten Monomer umfasst, dargestellt durch Formel $RCF=CR_2$, wobei jedes R unabhängig Fluor, Chlor, Brom, Wasserstoff, eine Fluoralkylgruppe mit bis zu 8 Kohlenstoffatomen, die wahlweise durch ein oder mehrere Sauerstoffatome unterbrochen ist, eine Fluoralkoxygruppe mit bis zu 8 Kohlenstoffatomen, die wahlweise durch ein oder mehrere Sauerstoffatome unterbrochen ist, Alkyl mit bis zu 10 Kohlenstoffatomen, Alkoxy mit bis zu 8 Kohlenstoffatomen oder Aryl mit bis zu 8 Kohlenstoffatomen ist.

## Revendications

1. Procédé de fabrication d'un article tridimensionnel, le procédé comprenant :

le chauffage d'une composition comprenant une charge inorganique et un fluoropolymère ;
l'extrusion de la composition sous forme fondue à partir d'une tête d'extrusion pour fournir au moins une partie d'une première couche de l'article tridimensionnel ; et
l'extrusion d'au moins une deuxième couche de la composition sous forme fondue sur au moins la partie de la première couche pour fabriquer au moins une partie de l'article tridimensionnel,
dans lequel le fluoropolymère est un fluorothermoplastique semi-cristallin et a un point de fusion allant jusqu'à 325 °C et moins de 50 pour cent en poids de motifs interpolymérisés de fluorure de vinylidène ou dans lequel

le fluoropolymère est amorphe et a une température de transition vitreuse allant jusqu'à 280 °C.

**2.** Procédé selon la revendication 1, dans lequel le fluoropolymère comprend des motifs interpolymérisés d'au moins un monomère à insaturation éthylénique partiellement fluoré ou perfluoré représenté par la formule $RCF=CR_2$, dans lequel chaque R est indépendamment fluoro, chloro, bromo, hydrogène, un groupe fluoroalkyle ayant jusqu'à 8 atomes de carbone et éventuellement interrompu par un ou plusieurs atomes d'oxygène, un groupe fluoroalcoxy ayant jusqu'à 8 atomes de carbone et éventuellement interrompu par un ou plusieurs atomes d'oxygène, alkyle ayant jusqu'à 10 atomes de carbone, alcoxy ayant jusqu'à 8 atomes de carbone, ou aryle ayant jusqu'à 8 atomes de carbone.

**3.** Procédé selon la revendication 1 ou 2, dans lequel le fluoropolymère est un fluoropolymère amorphe comprenant des motifs interpolymérisés d'au moins l'un parmi fluorure de vinylidène, tétrafluoroéthylène, hexafluoropropylène, chlorotrifluoroéthylène, 2-chloropentafluoropropène, dichlorodifluoroéthylène, 1,1-dichlorofluoroéthylène, 1-hydropentafluoropropylène, 2-hydropentafluoropropylène, un éther perfluorovinylique, un éther perfluoroallylique, un 1,3-dioxole perfluoré éventuellement substitué par perfluoro-alkyle en $C_{1 \text{ à } 4}$ ou perfluoro-alcoxy en $C_{1 \text{ à } 4}$, poly(perfluoro-4-vinyloxy-1-butène), poly(perfluoro-4-vinyloxy-3-méthyl-1-butène), ou un perfluoro-2-méthylène-1,3-dioxolane qui est non substitué, substitué par au moins l'un parmi perfluoro-alkyle en $C_{1 \text{ à } 4}$ ou perfluoro-alcoxy en $C_{1 \text{ à } 4}$-alkyle en $C_{1 \text{ à } 4}$, ou condensé à un cycle perfluoré de 5 ou 6 chaînons contenant éventuellement un atome d'oxygène.

**4.** Procédé selon la revendication 1 ou 2, dans lequel le fluoropolymère est un fluorothermopolymère semi-cristallin comprenant des motifs interpolymérisés d'au moins l'un parmi fluorure de vinylidène, tétrafluoroéthylène, hexafluoropropylène, chlorotrifluoroéthylène, 2-chloropentafluoropropène, dichlorodifluoroéthylène, 1,1-dichlorofluoroéthylène, 1-hydropentafluoropropylène, 2-hydropentafluoropropylène, éthers perfluorovinyliques, ou éthers perfluoroallyliques.

**5.** Procédé selon l'une quelconque des revendications 1 à 4, dans lequel la charge inorganique comprend au moins l'un parmi des métaux, oxydes de métaux, sulfures de métaux, céramiques de non-oxyde, céramiques d'oxyde, carbone, silicates, dioxyde de titane, zircone, silice, ou un pigment.

**6.** Procédé selon l'une quelconque des revendications 1 à 5, dans lequel la charge inorganique comprend au moins l'un parmi des fibres, des particules, des tubes, ou des sphères creuses.

**7.** Procédé selon l'une quelconque des revendications 1 à 6, dans lequel la charge inorganique a un rapport d'aspect de la longueur à la largeur inférieur à 10 000 à 1.

**8.** Procédé selon l'une quelconque des revendications 1 à 7, dans lequel la charge inorganique comprend des microsphères céramiques creuses.

**9.** Procédé selon la revendication 8, dans lequel les microsphères céramiques creuses ne sont pas traitées en surface avec un agent de couplage.

**10.** Procédé selon l'une quelconque des revendications 1 à 9, dans lequel la composition comprend plus de 80 pour cent en poids du fluoropolymère, sur la base du poids total de la composition.

**11.** Procédé selon l'une quelconque des revendications 1 à 10, dans lequel la composition est essentiellement dépourvue de fibres cellulosiques et de fibres de verre.

**12.** Procédé selon l'une quelconque des revendications 1 à 11, dans lequel la composition est fournie en tant que filament comprenant le fluoropolymère et une charge inorganique.

**13.** Procédé selon l'une quelconque des revendications 1 à 12, comprenant en outre :

la récupération, à partir d'un support non transitoire lisible par machine, de données représentant un modèle de l'article tridimensionnel ; et
l'exécution, par un ou plusieurs processeurs assurant l'interface avec un dispositif de fabrication, d'instructions de fabrication en utilisant les données.

**14.** Filament pour utilisation dans la fabrication de filaments fusionnés, le filament comprenant une charge inorganique

et un fluoropolymère, dans lequel le fluoropolymère est un fluorothermoplastique semi-cristallin et a un point de fusion allant jusqu'à 325 °C et moins de 50 pour cent en poids de motifs interpolymérisés de fluorure de vinylidène ou dans lequel le fluoropolymère est amorphe et a une température de transition vitreuse allant jusqu'à 280 °C.

**15.** Filament selon la revendication 14, dans lequel le fluoropolymère comprend des motifs interpolymérisés d'au moins un monomère à insaturation éthylénique partiellement fluoré ou perfluoré représenté par la formule $RCF=CR_2$, dans lequel chaque R est indépendamment fluoro, chloro, bromo, hydrogène, un groupe fluoroalkyle ayant jusqu'à 8 atomes de carbone et éventuellement interrompu par un ou plusieurs atomes d'oxygène, un groupe fluoroalcoxy ayant jusqu'à 8 atomes de carbone et éventuellement interrompu par un ou plusieurs atomes d'oxygène, alkyle ayant jusqu'à 10 atomes de carbone, alcoxy ayant jusqu'à 8 atomes de carbone, ou aryle ayant jusqu'à 8 atomes de carbone.

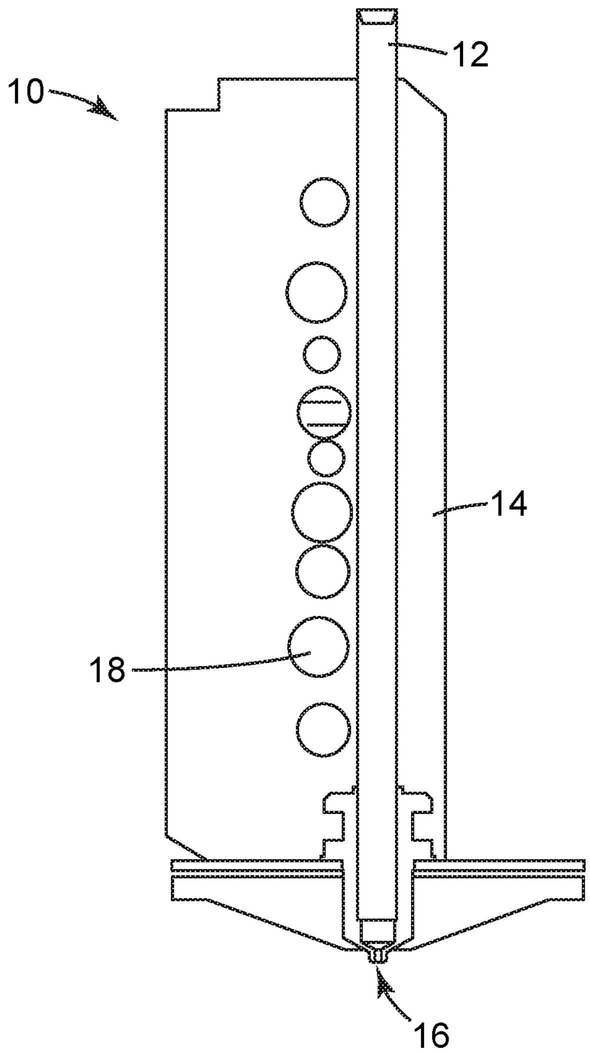


FIG. 1

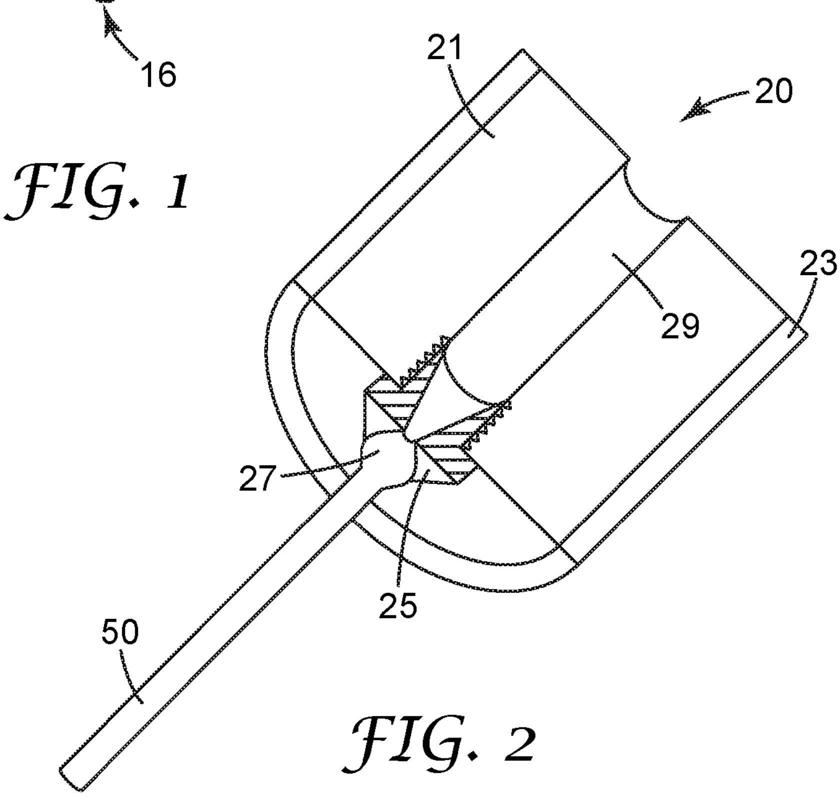


FIG. 2

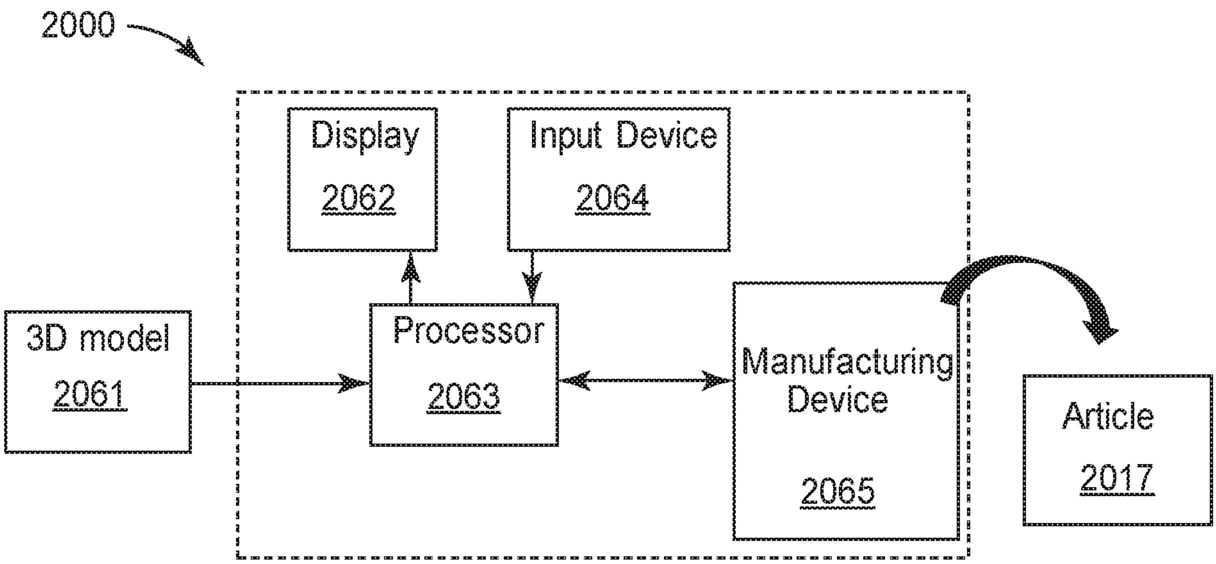
2000
Display
2062
Input Device
2064
3D model
2061
Processor
2063
Manufacturing
Device
2065
Article
2017

FIG. 3

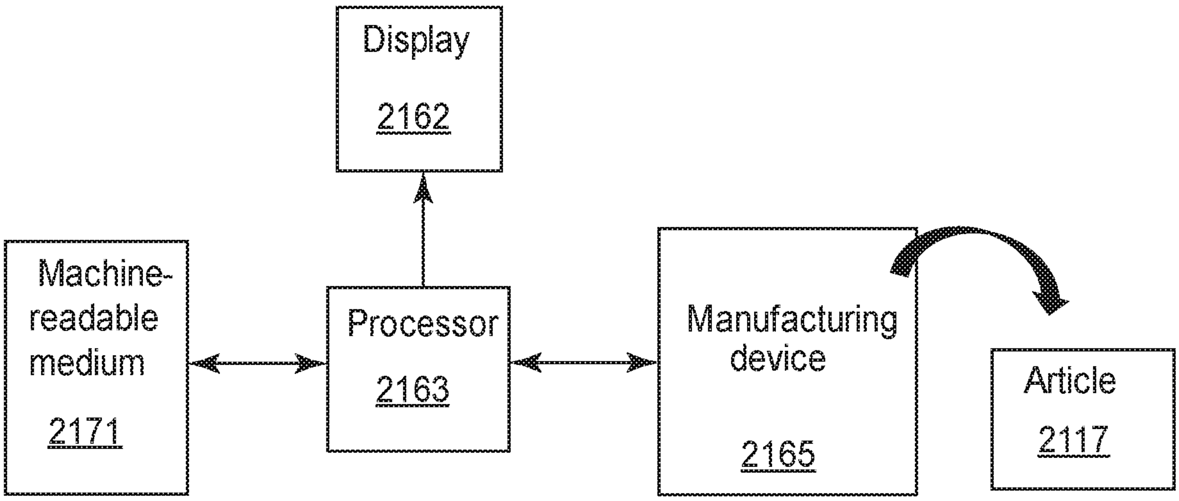
Display
2162
Machine-
readable
medium
2171
Processor
2163
Manufacturing
device
2165
Article
2117

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160002468, Heikkila
- US 20160324491 A, Sweeney
- US 7910041 B, Priedeman, Jr.
- US 20160298268 A, Gallucci
- US 2016016369 A1
- US 20130071599 A, Kraibühler
- US 20070031791, Cinader, Jr
- US 8292610 B, Hehl
- US 6255536 B, Worm
- US 6294627 B, Worm
- US 5891965 A, Worm
- US 6255535 B, Schulz
- US 4349650 A, Krespan
- US 4558141 A, Squire
- US 3051677 A, Rexford
- US 3318854 A, Honn
- US 2968649 A, Pailthorp
- US 20070015937 A
- US 6429258 B
- US 5442097 A, Obermeier
- US 6613941 B, Felix
- US 6794550 B, Hintzer
- US 6706193 B, Burkard
- US 7018541 B, Hintzer
- US 5285002 A
- US 5378782 A, Grootaert
- US 2978340 A, Veatch
- US 3030215 A, Veatch
- US 3129086 A, Veatch
- US 3230064 A, Veatch
- US 3365315 A, Beck
- US 4391646 A, Howell
- US 4767726 A, Marshall
- US 20060122049, Marshall
- US 9006302 B, Amos
- WO 2013148307 A, Barrios
- WO 2014100593 A, Amos
- WO 2014100614 A, Amos
- US 3061495 A, Alford
- US 5219508 A, Collier
- WO 2010151610 A, Grootaert
- US 5767204 A, Iwa
- US 5700879 A, Yamamoto
- US 5621145 A, Saito
- US 5565512 A, Saito
- US 4281092 A, Breazeale
- US 5554680 A, Ojakaar


### Non-patent literature cited in the description


- **TURNER, B.N. et al.** A review of melt extrusion additive manufacturing processes: I. process design and modeling. *Rapid Prototyping Journal,* 2014, vol. 20/3, 192-204
- Amorphous Fluoropolymers. **OKAMOT et al.** Handbook of Fluoropolymer Science and Technology. 2014, 377-391
- **LOGOTHETIS.** *Prog. Polym. Sci.,* 1989, vol. 14, 257-258
- **T. C. FITZGIBBONS et al.** Benzene-derived carbon nanothreads. *Nature Materials,* 2015, vol. 14, 43-47
- **R. ZHENG et al.** Preparation, characterization and growth mechanism of platelet carbon nanofibers. *Carbon,* April 2006, vol. 44 (4), 742-746
- **P. HAN et al.** *ACS Nano,* 2014, vol. 8 (9), 9181-9187
- **Z. J. QI et al.** *Nano Lett.,* 2014, vol. 14 (8), 4238-4244
- **X. ZHU et al.** *J. Nanosci. Nanotechnol.,* July 2010, vol. 10 (7), 4109-4123
- **R. GRANGE et al.** *Appl. Phys. Lett.,* 2009, vol. 95, 143105
- **Y. YANG et al.** *Advanced Materials,* July 2007, vol. 19 (14), 1839-1844
- **M. PUMERA et al.** *Chem Asian J.,* May 2009, vol. 4 (5), 662-667
- **M. PUMERA et al.** *Nanotechnology,* 2009, vol. 20 (42), 425606
- **J. GOLDBERGER et al.** *Nature,* April 2003, vol. 422, 599-602
- **MONTE, S.J.** Ken-React® Reference Manual - Titanate, Zirconate and Aluminate Coupling Agents. Kenrich Petrochemicals, Inc, March 1995
- Gelest Catalog 3000-A Silanes and Silicones. **BARRY ARKLES.** Silane Coupling Agents: Connecting Across Boundaries. Gelest Inc, 165-189